(19) Europäisches Patentamt / European Patent Office / Office européen des brevets

(11) **EP 2 135 660 B1**

(12) **FASCICULE DE BREVET EUROPEEN**

(45) Date de publication et mention
de la délivrance du brevet:
**29.06.2011 Bulletin 2011/26**

(51) Int Cl.:
***B01D 46/00*** *(2006.01)*  ***F24F 3/16*** *(2006.01)*
***F04D 27/02*** *(2006.01)*  ***F24F 11/00*** *(2006.01)*

(21) Numéro de dépôt: **09290252.7**

(22) Date de dépôt: **03.04.2009**

(54) **Procédé de détermination du niveau de colmatage de filtres à air**

Verfahren zur Bestimmung des Verschmutzungsniveaus von Luftfiltern

Method for determining the clogging level of air filters

(84) Etats contractants désignés:
**AT BE BG CH CY CZ DE DK EE ES FI FR GB GR
HR HU IE IS IT LI LT LU LV MC MK MT NL NO PL
PT RO SE SI SK TR**

(30) Priorité: **17.06.2008 FR 0803372**

(43) Date de publication de la demande:
**23.12.2009 Bulletin 2009/52**

(73) Titulaire: **Atlantic Climatisation et Ventilation
69330 Meyzieu (FR)**

(72) Inventeurs:
• **Demia, Laurent
01120 Montluel (FR)**
• **Petit, Frédéric
69150 Decines Charpieu (FR)**

(74) Mandataire: **Hirsch & Associés
58, avenue Marceau
75008 Paris (FR)**

(56) Documents cités:
**WO-A-92/00492      FR-A- 2 689 784
FR-A- 2 884 904      JP-A- 8 128 698
US-A- 4 751 501**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

La présente invention concerne la régulation du débit d'air dans les installations de ventilation comportant des colonnes d'extraction ou d'insufflation d'air desservant chacune plusieurs locaux.

Une telle installation comporte un groupe de mise en circulation d'air au moyen d'un moto-ventilateur logé dans un caisson usuellement disposé en terrasse d'un immeuble dont les appartements sont desservis par des colonnes d'arrivée et/ou d'aspiration d'air. Pour limiter les pertes thermiques, chaque appartement peut être équipé d'un coffret à double flux, c'est-à-dire à flux croisés entre l'air neuf entrant et l'air vicié qui est évacué dans la colonne d'aspiration.

Le moto-ventilateur comporte un filtre en amont et, de même, chaque coffret d'appartement comporte une paire de filtres amont, c'est-à-dire un filtre d'entrée d'appartement, en sortie locale de la colonne d'arrivée, et un filtre de sortie d'appartement, au raccordement entre une gaine d'extraction d'air de l'appartement et le coffret.

Au fil du temps, le colmatage des filtres augmente la perte de charge dans l'installation, donc l'efficacité du ventilateur. Au-delà d'un certain niveau, il ne peut plus assurer la qualité de service voulue.

Comme les filtres des coffrets individuels sont donc répartis dans les divers appartements, il est évidemment exclu, pour des questions de coût de personnel, que des membres du service d'entretien passent cycliquement pour vérifier l'état de colmatage des filtres et, le cas échéant, procéder à leur remplacement.

Par ailleurs, FR-A-2 689 784 décrit un dispositif de détection d'encrassement d'un filtre à air situé dans un conduit d'une installation de traitement d'air fonctionnant à débit d'air constant ou variable. Ce dispositif permet de détecter l'encrassement du filtre par le traitement comparatif de mesures de vitesses d'écoulement, d'une part, du débit traversant le filtre lui-même, d'autre part du débit s'établissant dans un petit conduit auxiliaire établi en by-pass du filtre.

La présente invention vise à proposer une solution au problème susmentionné de surveillance de l'état d'encrassement, ou colmatage, des filtres d'entrée et/ou de sortie d'air de locaux respectifs.

A cet effet, l'invention concerne tout d'abord un procédé d'estimation de l'évolution d'un niveau de colmatage de filtres à air installés dans divers locaux et reliés à une installation d'au moins une conduite d'échange d'air, activée par un ventilateur entraîné par un moteur, caractérisé par la suite des étapes suivantes :

a) à un instant initial, on détermine et mémorise un jeu initial J0 de valeurs de paramètres associés de fonctionnement de l'installation, paramètres comprenant un paramètre de débit d'air instantané assuré par le ventilateur et au moins un paramètre instantané associé de fonctionnement du ventilateur pour assurer le débit d'air instantané considéré, les paramètres associés variant de façon corrélée pour définir une courbe de réponse, initiale, prévue pour l'installation,

b) à un instant courant, on détermine des valeurs courantes des dits paramètres pour un point de fonctionnement courant sur une dite courbe de réponse, actuelle,

c) on compare les valeurs courantes au jeu initial J0 pour déterminer une direction de dérive du point de fonctionnement courant par rapport à la courbe de réponse initiale, et

d) on détermine un sens d'évolution du niveau de colmatage d'après la direction de la dérive.

On notera tout d'abord que l'instant initial est arbitraire. De préférence, ce sera le moment de la mise en service de l'installation. Toutefois, de façon générale, on peut prévoir un instant initial "glissant", pour suivre l'état de l'installation au fil des remplacements ou nettoyages de certains filtres. L'invention permet ainsi de suivre, au fil du temps, les ondulations de colmatage global de l'installation, c'est-à-dire, d'une part, le colmatage progressif de tous les filtres, chaque filtre ayant une vitesse propre d'évolution de son colmatage, en fonction de la pollution de l'air qui le traverse et de la durée d'ouverture de la bouche correspondante, et, d'autre part, la chute brutale de colmatage des bouches ou coffrets dont l'utilisateur a nettoyé ou remplacé le filtre.

De préférence, les instants initial et courant sont choisis à une période de la journée où le besoin en débit est stable. En particulier, les instants initial et courant peuvent être choisis la nuit, car le besoin en débit pour l'installation est alors sensiblement constant d'une journée à l'autre. Par exemple, en choisissant l'instant initial et courant durant la nuit, le besoin en débit à ces instants peut être égal au débit minimal de l'installation, car aucun occupant ne demande alors un débit de ventilation.

On notera aussi que, comme le colmatage induit une perte de charge, l'invention peut s'appliquer à tout réseau de fluide, c'est-à-dire de gaz ou de liquide.

Par ailleurs, les paramètres de fonctionnement permettant d'assurer le débit considéré sont avantageusement choisis parmi : la (dé)pression que doit assurer le ventilateur, la puissance électrique du moteur d'entraînement du ventilateur, le couple de sortie de l'arbre moteur, l'intensité du courant consommé par le moteur ou la fréquence de rotation imposée au moteur.

De préférence, à l'étape c), on mesure la dérive pour, à l'étape d), estimer un niveau de dérive de colmatage, selon une loi croissant avec la dérive mesurée.

On peut ainsi disposer d'une valeur globale de colmatage de l'installation, pour décider d'effectuer une action de réglage de consigne de fonctionnement ou un remplacement des filtres si un seuil haut de colmatage est franchi.

Selon un mode particulier de mise en oeuvre du procédé, on mémorise de dits niveaux de dérive de colmatage au fil du temps pour ainsi établir une table de prédiction temporelle de l'évolution du niveau de colmatage, et, par la suite, on utilise la table de prédiction pour effectuer la dite estimation du niveau de dérive de colmatage.

La table peut être établie sur une première période de fonctionnement de l'installation, pour ensuite extrapoler la courbe d'évolution du colmatage ainsi établie, ou bien la table peut être établie à partir d'une autre installation du même type, plus ancienne, pour ainsi disposer de la dite courbe sur une longue période, donc sans nécessité d'extrapolation.

Pour affiner l'exploitation de la table, on compare des conditions actuelles d'environnement effectif d'utilisation des filtres à des conditions homologues ayant existé lors de l'établissement de la table de prédiction, et on dilate, respectivement condense, une échelle de temps de la table de prédiction selon que les conditions actuelles d'environnement effectif sont moins dures, respectivement plus dures, que celles associées à la table de prédiction.

Les informations sur le colmatage peuvent servir à déterminer une valeur de périodicité d'interventions à prévoir pour le remplacement des filtres.

Toutefois, en outre, il est avantageux d'utiliser les informations de colmatage pour ajuster les conditions de fonctionnement de l'installation, c'est-à-dire maintenir les performances requises. En effet, en l'absence d'ajustements, il faudrait prendre une grande marge de sécurité pour tolérer le colmatage, cette marge de sécurité représentant un excédent de consommation électrique, qui n'aurait sa raison d'être qu'en fin de cycle, c'est-à-dire lorsque le niveau de colmatage des filtres a atteint la limite admissible. La détermination des informations relatives au colmatage constitue ainsi une première phase, d'estimation de l'état de colmatage de l'installation, pour que, dans une seconde phase, celle-ci détermine elle-même de nouvelles conditions de fonctionnement, parfaitement adaptées aux nouvelles conditions de colmatage. L'installation étant ainsi auto-adaptative, il est donc inutile de prévoir une grande marge de sécurité en ce qui concerne la (dé)pression que doit assurer le ventilateur, c'est-à-dire la puissance de celui-ci.

Ainsi, on peut prévoir de corriger une courbe de consigne de régulation du ventilateur en lui appliquant une dérive de consigne dans un sens fonction de la dite direction de dérive du colmatage.

En particulier, en pareil cas, on peut affecter, à la dérive de consigne, une amplitude fonction du dit niveau de dérive de colmatage.

Dans une forme particulière de régulation, la courbe de consigne spécifiant une pression de consigne déterminée pour tout débit d'air, l'amplitude de la dérive de consigne, de pression, est de la forme :

$$\Delta P = \Delta Pm \times (Q_{BL} / Qm)^2$$

où

$\Delta Pm$ est une valeur de perte de charge mesurée dans un dit filtre pour un débit d'air Qm, et
$Q_{BL}$ est une valeur de débit d'air individuel maximal prévu pour une bouche de la conduite, c'est-à-dire une bouche à débit d'air maximal par rapport aux autres.

Dans une autre forme particulière de régulation, la courbe de consigne spécifiant un débit d'air de consigne, l'amplitude de la dérive de consigne, de pression, est de la forme :

$$\Delta P = (P1min - Pmin) \times (Q_{BL} / Qmin)^2$$

où

P1 min est une valeur courante de pression pour assurer le débit d'air de consigne,
Pmin est une valeur initiale de pression pour assurer le débit d'air de consigne,
$Q_B$ est, comme ci-dessus, une valeur de débit d'air individuel maximal prévu pour une bouche de la conduite, et
Qmin est une valeur de débit d'air Q minimal prévu pour l'installation.

Dans les deux cas ci-dessus, on peut corriger la courbe de consigne en y ajoutant une fonction de la valeur de l'amplitude $\Delta P$ de la dérive de consigne telle que calculée ci-dessus, cette fonction étant en outre croissante avec la valeur de débit d'air instantané Q à assurer.

La valeur de la dérive de pression $\Delta P$ est en effet une valeur qui, selon les deux formules précédentes, est normée à une valeur maximale, pour satisfaire tout besoin d'un débit d'air maximal. On peut toutefois tempérer cette correction maximale lorsque le besoin réel de débit d'air est moindre. La correction peut, par exemple, suivre une loi quadratique avec le débit d'air réel, pour ainsi compenser au mieux les pertes de charge.

Pour signaler une dérive excessive, nécessitant une intervention sur les filtres, on compare le niveau de dérive à un seuil haut, de dérive admissible, et on engendre une alarme si le seuil haut est atteint.

Dans un mode de mise en oeuvre du procédé,

- à l'étape b), on applique un stimulus sous forme d'un décalage de pression d'une valeur courante de pression d'air assurée par le ventilateur, par décalage de la valeur d'un dit paramètre associé, par rapport à une valeur homologue du jeu initial J0, et,
- à l'étape c), à titre de dite dérive, on mesure une variation de débit d'air, induite par le dit décalage de pression.

En pareil cas, on peut prévoir que :

- on répète, au moins une fois, à un instant courant ultérieur, les étapes ci-dessus, en calculant à chaque fois une pente courante respective $\Delta Qx/\Delta Px$ et $\Delta Qy/\Delta Py$, de variation de débit d'air par rapport à une variation de pression, et,
- à l'étape c), on compare les pentes courantes respectives $\Delta Qx/\Delta Px$ $\Delta Qy/\Delta Py$ pour déterminer la dite direction de dérive du point de fonctionnement courant.

Ainsi, à mesure que croît le colmatage, la perte de charge correspondante dans les filtres limite l'accroissement du débit d'air en cas de stimulus d'accroissement de (dé)pression. En d'autres termes, l'installation présente une signature, de réponse aux stimuli d'augmentation de (dé)pression, qui s'affaiblit, puisque le débit d'air est bridé par le colmatage.

Pour simplifier les calculs, la variation de pression est normée à une même valeur prédéterminée ($\Delta Px = \Delta Py$) aux divers instants (x, y) et on prend en considération la valeur de variation de débit d'air à titre de valeur de dite pente.

Dans ces derniers modes de mise en oeuvre, il peut être prévu que le stimulus soit produit par le décalage de la valeur d'un paramètre de commande de fonctionnement du ventilateur, constituant le dit paramètre associé, par exemple la puissance électrique du moteur d'entraînement du ventilateur ou encore la fréquence de rotation qui lui est imposée.

Dans un autre mode de mise en oeuvre du procédé :

- on applique un stimulus sous forme d'un décalage $\Delta Qx$ d'une valeur courante du dit débit d'air Qx du ventilateur, par rapport à une valeur homologue Q0 du jeu initial J0,
- on détecte une variation d'un dit paramètre associé induite par le dit décalage de débit d'air, et
- on détermine le dit sens d'évolution du niveau de colmatage d'après un signe d'une sensibilité du paramètre associé vis-à-vis du dit stimulus.

La dite mesure de dérive correspond par exemple à une mesure d'une amplitude de la dite sensibilité, représentée par une amplitude de la dite variation induite du paramètre associé.

Le stimulus peut être naturel, c'est-à-dire correspondre à l'ouverture ou la fermeture d'une bouche par un utilisateur. Il peut aussi être provoqué par un gestionnaire de l'installation, c'est-à-dire une personne ou bien un système électronique pilotant le ventilateur.

La variation de débit d'air se traduit donc par une variation des conditions de charge du ventilateur.

D'une part, si le niveau d'alimentation électrique de celui-ci est fixe, c'est-à-dire si le ventilateur fonctionne selon une courbe de réponse pression/débit d'air naturelle, une augmentation du débit d'air va donc diminuer la dépression produite par le ventilateur, si l'on suppose qu'il fonctionne en aspiration.

D'autre part, si la puissance d'alimentation du ventilateur est asservie par un dispositif électronique pour rester sur une courbe de réponse de consigne, la variation de pression, provoquée par le stimulus de variation de débit d'air, va être compensée par l'asservissement, c'est-à-dire masquée, et c'est donc la nouvelle commande d'asservissement appliquée au ventilateur qui va constituer la signature de réponse de l'installation au stimulus.

En bref, le stimulus créé au niveau du paramètre de service, "aval", de l'installation, c'est-à-dire le service de débit d'air suffisant à assurer pour les utilisateurs, induit une modification d'au moins un paramètre "amont", permettant d'assurer la valeur voulue du paramètre aval, de débit d'air, ce paramètre amont modifié pouvant être, selon les deux cas exposés ci-dessus, la (dé)pression produite par le ventilateur ou bien la puissance d'entraînement de celui-ci.

En pareil cas, on peut prévoir que :

- on répète au moins une fois les étapes ci-dessus, à un instant courant ultérieur, et
- on calcule à chaque fois une pente courante respective $\Delta Qx/\Delta Px$, $\Delta Qy/\Delta Py$, dont le signe de l'évolution de la valeur au fil du temps indique le sens d'évolution du niveau de colmatage.

Comme évoqué ci-dessus, en ce qui concerne le cas d'un ventilateur à puissance asservie, dans une étape finale, pour déterminer la dite sensibilité du paramètre associé, on peut apporter une modification à une valeur de réglage d'un paramètre de commande de fonctionnement du ventilateur, constituant le dit paramètre associé, de façon à compenser, au moins selon un certain pourcentage, la dite variation du dit paramètre associé induite par le dit décalage de débit d'air, et la dite sensibilité du dit paramètre associé est déterminée d'après la valeur de la dite modification apportée, rapportée au dit pourcentage.

Dans un mode de mise en oeuvre particulier du procédé, ayant prévu une bouche de service étalon, à débit étalon, on commute son état pour passer, dans un sens quelconque connu, entre deux états extrêmes, respectivement de fermeture et d'ouverture, afin d'engendrer, à l'instant courant Tx, un décalage $\Delta Qx$ d'une valeur courante du dit débit d'air Qx du ventilateur, par rapport à une valeur homologue Q0 du jeu initial J0, - et on effectue les étapes b) et suivantes.

Si, par exemple, on ouvre la bouche étalon, elle va donc partiellement court-circuiter les autres bouches d'une colonne constituant une dite conduite, avec un effet de court-circuit d'autant plus marqué que celles-ci en sont proches et sont colmatées. Ainsi, et de façon très schématique, si le filtre d'une bouche proche est propre, la perte de charge sur celui-ci est limitée, et il en est donc de même pour la chute, ainsi provoquée, de la pression différentielle.

Si l'on suppose, à titre purement didactique, qu'il n'y a qu'une bouche d'appartement d'ouverte dans l'installation, l'ouverture de la bouche étalon va doubler le débit d'air entrant dans la conduite commune de raccordement, en supposant, pour la simplicité de l'explication, que les deux bouches sont à même débit nominal. Par contre, si le filtre de la bouche d'appartement est colmaté, sa pression différentielle est élevée, c'est-à-dire que la colonne de raccordement "manque" d'air à ce niveau. L'ouverture de la bouche étalon va donc modifier plus profondément le niveau de pression dans la colonne, c'est-à-dire plus que doubler l'arrivée d'air et donc fortement ramener la pression interne vers la pression atmosphérique, puisque la bouche étalon va assurer un débit d'air bien supérieur à celui traversant le filtre colmaté.

En pareil cas, de façon avantageuse, on effectue une commutation progressive de débit d'air par commutation progressive de l'état de la bouche de service étalon entre les états extrêmes et on effectue, en une pluralité N d'instants courants, une dite pluralité N d'échantillonnages de la réponse de l'installation en termes de dites valeurs courantes des dits paramètres selon l'étape b) et, d'après la pluralité de dits niveaux de dérive ainsi obtenus, on établit une courbe de sensibilité de réponse de l'installation vis-à-vis de la dite commutation de débit d'air.

On peut alors prévoir que :

- on modélise l'état d'une autre pluralité de filtres de la dite conduite, par une équation comportant, en variables, les niveaux respectifs de colmatage de l'autre pluralité de filtres,
- on effectue une dite pluralité d'échantillonnages au moins égale à l'autre pluralité de filtres, et
- on établit ainsi au moins une dite autre pluralité de dites équations, ce qui permet d'en déterminer une dite autre pluralité de valeurs des variables de colmatage.

Ainsi, la commutation progressive de la bouche étalon équivaut à injecter N valeurs de stimuli pour ainsi déterminer autant de signatures de réponse de l'installation. L'analyse de la corrélation entre ces signatures, c'est-à-dire la corrélation due au fait que le niveau déterminé de colmatage de chaque filtre se manifeste dans chaque équation, permet donc d'individualiser le niveau de colmatage de chaque filtre. Il s'agit là d'un résultat de grande valeur puisqu'il permet d'établir un diagnostic à distance pour chaque filtre, donc sans devoir effectuer de visites périodiques sur place.

En particulier, comme les filtres de chaque local respectif sont reliés de façon étagée sur la conduite, ils ne sont pas perçus comme étant strictement mutuellement en parallèle, puisqu'un tronçon de conduite les sépare. De la sorte, la réponse de chaque filtre se manifeste, au niveau du ventilateur, à travers une perte de charge instantanée dans la conduite, la valeur de cette perte de charge instantanée étant spécifique à chaque filtre. En d'autres termes, chaque filtre est associé à deux variables qui sont son niveau de colmatage (et donc sa perte de charge à un débit d'air instantané) et la perte de charge que subit ce débit d'air jusqu'au ventilateur. Ainsi, bien que les bouches, équipées de filtres, s'influencent mutuellement de par le flux d'air que chacune échange avec la conduite, et qui crée un supplément de perte de charge, la bouche à l'origine d'une modification de l'état (dé)pression / débit d'air dans la conduite, de par le colmatage de la bouche, pourra finalement être distinguée des autres. Chaque manifestation du niveau de colmatage d'un filtre est ainsi affectée d'un "cachet" (perte de charge dans le tronçon) qui lui est propre à l'instant considéré. Une pluralité de mesures en divers états permet donc de "séparer les variables".

Dans un autre mode de mise en oeuvre du procédé :

- on mémorise une valeur moyenne de l'un des dits paramètres sur une plage horaire prédéterminée et sur une durée représentant plusieurs cycles d'utilisation de l'installation, et
- on détermine de même, sur un dit cycle postérieur, une dite valeur moyenne courante du paramètre,
- et l'étape c) est effectuée d'après les dites valeurs courantes, respectivement mémorisée et courante.

On constitue ainsi un historique de la signature de réponse de l'installation, avec une intégration sur par exemple plusieurs jours ou plusieurs semaines, chaque jour constituant un cycle d'utilisation primaire, dont la validité, comme base de référence, peut être accrue en passant à un cycle hebdomadaire. Les saisons peuvent aussi être prises en compte, pour valider une telle base de référence pendant la saison considérée et valider une autre telle base de référence pendant une autre saison, puisque les taux d'utilisation des bouches peuvent varier selon les saisons, de par une modification des besoins des utilisateurs ou même de par leur absence, par exemple en été.

De façon intéressante,

- on fait varier un niveau courant de pression dans l'installation dans une plage débordant au-dessus d'une valeur de seuil minimal de bon fonctionnement de bouches, associées à des filtres respectifs, à bridage du débit d'air au-delà d'un débit d'air nominal en cas de pression différentielle excédant une pression différentielle prédéterminée correspondant au dit seuil minimal et assurant au moins le débit d'air nominal,
- on échantillonne, au fil du temps, la valeur du débit d'air afin de mesurer une variation de débit d'air ainsi induite, pour établir une courbe de réponse actuelle en débit d'air, et

- on repère, sur la courbe de réponse actuelle en débit d'air, au moins une rupture de pente correspondant à une transition entre un fonctionnement incorrect de l'une des bouches, à débit d'air inférieur au débit d'air nominal, et un dit bon fonctionnement, à débit d'air excédant le débit d'air nominal et provoquant ainsi le bridage du débit d'air, ce qui fournit une mesure de la pression différentielle de la bouche considérée pour les conditions de fonctionnement de l'installation alors définies par les paramètres.

On utilise donc les bouches à bridage de débit d'air comme une sorte de capteur à cliquet, qui va fournir, par sa réponse présentant un coude, l'indication du passage par une valeur connue de (dé)pression en un point déterminé de la conduite. Il suffit donc de prévoir une dynamique suffisante de variation de (dé)pression, dans un sens ou dans l'autre, pour, par exemple, faire "décrocher" successivement les diverses bouches par une réduction de la (dé)pression appliquée, les bouches les plus défavorisées décrochant les premières, par passage en dessous de la pression différentielle de seuil. On peut ainsi établir une "carte" de pression le long de la conduite, en fonction de la (dé)pression appliquée par le ventilateur.

L'invention concerne aussi un groupe de ventilation pour la mise en oeuvre du procédé selon l'invention, comportant une unité centrale de commande d'un moteur d'entraînement d'un ventilateur prévu pour être relié à une installation de ventilation comportant au moins une conduite d'échange d'air avec divers locaux, caractérisé par le fait qu'il comporte :

- des circuits d'asservissement du ventilateur agencés pour, à un instant initial, déterminer et mémoriser un jeu initial J0 de valeurs de paramètres associés de fonctionnement de l'installation, paramètres comprenant un paramètre de débit d'air instantané assuré par le ventilateur et au moins un paramètre instantané associé de fonctionnement du ventilateur pour assurer le débit d'air instantané considéré, les paramètres associés variant de façon corrélée pour définir une courbe de réponse, initiale, prévue pour l'installation, les circuits d'asservissement étant agencés pour, à un instant courant, déterminer des valeurs courantes des dits paramètres pour un point de fonctionnement courant sur une dite courbe de réponse, actuelle, et
- des circuits de calcul, agencés pour comparer les valeurs courantes au jeu initial J0 pour déterminer une direction de dérive du point de fonctionnement courant par rapport à la courbe de réponse initiale, et agencés pour déterminer un sens d'évolution du niveau de colmatage d'après la direction de la dérive.

L'invention sera mieux comprise à l'aide de la description suivante d'un mode de mise en oeuvre du procédé de l'invention dans une installation de ventilation exploitant le procédé de l'invention, en référence au dessin annexé, sur lequel :

- la figure 1 est une vue générale schématique de l'architecture d'une installation de ventilation comportant le groupe de ventilation de l'invention, relié à des colonnes d'aspiration desservant divers appartements d'un immeuble,
- la figure 2 est un diagramme par blocs fonctionnels illustrant la constitution du groupe de ventilation,
- la figure 3 est une vue schématique d'une installation plus complète que celle de la figure 1, c'est-à-dire dont l'architecture a été dupliquée en deux réseaux homologues ramifiés pour effectuer aussi une insufflation d'air dans les appartements, à travers des échangeurs thermiques à flux croisés,
- la figure 4 représente diverses courbes de réponse, naturelle ou de consigne, d'un ventilateur assurant la circulation de l'air dans l'un des deux réseaux,
- la figure 5 illustre une courbe de consigne à dépression constante en fonction du débit d'air Q, la valeur de dépression de consigne "constante", pouvant toutefois être accrue pour compenser une perte de charge due au colmatage de filtres,
- la figure 6 est un homologue de la figure 5, mais dans le cas d'une régulation à dépression croissante avec le débit d'air,
- la figure 7 est un graphe illustrant la dérive d'une plage de débits d'air au fil du temps,
- la figure 8 est un schéma électrique modélisant l'installation,
- la figure 9 est un schéma représentant diverses tensions du schéma de la figure 8, et
- la figure 10 représente une courbe de réponse montrant la variation du débit d'air en fonction de la pression.

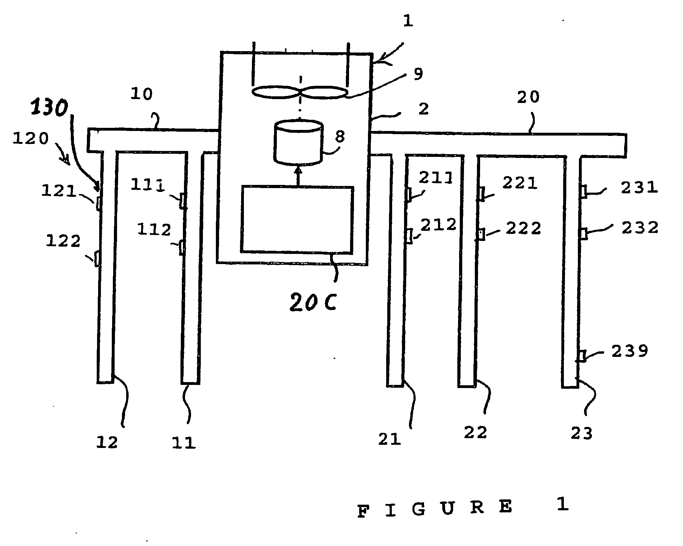

La figure 1 représente schématiquement une installation de ventilation, dans cet exemple d'extraction d'air de divers locaux par aspiration à travers un réseau ramifié de canalisations. Le réseau comprend ici un nombre BR = deux branches 10, 20 aboutissant à un tronc commun constitué par un groupe de ventilation 1 comportant un caisson 2 relié à une extrémité aval des branches 10, 20 respectives et contenant un ensemble motoventilateur à moteur 8 d'entraînement d'un ventilateur 9 d'aspiration de l'air des branches 10, 20 pour le rejeter dans l'atmosphère. La branche 10 collecte l'air d'une pluralité d'ici deux colonnes 11, 12, munies chacune d'une pluralité de dispositifs susceptibles de se colmater et d'induire des pertes de charge supplémentaires, tels que des bouches 111, 112 et autres, et respectivement 121, 122, et autres, d'aération de locaux comme par exemple des cuisines ou des salles de bain dans un ou plusieurs immeubles collectifs. De même, la branche 20 collecte l'air d'une pluralité d'ici trois colonnes 21, 22, 23 munies chacune d'une pluralité de bouches 211, 212 et autres, et 221, 222 et autres, et 231, 232, 233, 239 et autres, d'aération de locaux du même genre. Il y a ainsi un nombre CO = 5 colonnes comportant chacune un nombre particulier BO de bouches, indiquées de façon générale par la référence 120, avec un filtre à air associé indiqué de façon générale par la référence 130.

Chaque bouche 120 est équipée d'un ou plusieurs volets pour que l'utilisateur d'un local en commande l'ouverture, ou la fermeture qui l'isole partiellement de l'installation, sachant que la position dite de fermeture autorise un débit dit d'étiage. On conçoit donc que, si toutes les bouches d'aspiration 120 sont quasi fermées, le ventilateur 9 va engendrer une forte dépression dans l'ensemble de l'installation, donc avoir une bonne efficacité technique. Toutefois, dans une telle situation, le rendement, c'est-à-dire le service rendu, est faible.

Les bouches 120 sont classiquement de deux types possibles : auto-réglable et hygro-réglable, chaque type nécessitant une différence de pression supérieure à un seuil minimal particulier de pression différentielle PDs. Une bouche auto-réglable extrait l'air selon un débit d'air bridé à une valeur nominale Qn, c'est-à-dire ne pouvant croître que selon une pente très faible dès que la pression différentielle qui lui est appliquée dépasse le seuil bas minimal de bon fonctionnement, c'est-à-dire la pression différentielle PDs, alors qu'une bouche hygro-réglable présente un débit d'air qui croît avec le taux d'humidité, celui-ci provoquant son ouverture progressive. Hormis les différences ci-dessus liées à leur structure, on distingue aussi les bouches cuisine, qui ont des débits plus élevés que ceux des sanitaires et sont généralement associées à un minuteur de 30 minutes que l'utilisateur commande pour passer au débit d'air maximal. Un système est généralement hygro ou auto-réglable.

Si une ou quelques bouches 120 viennent à s'ouvrir, la dépression va donc diminuer dans l'installation puisque les divers flux d'air supplémentaires qui vont alors se propager dans les colonnes et les branches 10, 20 vont voir leurs écoulement être perturbé, et donc freiné, par le frottement sur les parois du conduit correspondant. Il s'ensuit ainsi une perte de charge, qui fait que le ventilateur 9 ne peut totalement imposer sa valeur de dépression au niveau des bouches 120. Comme l'efficacité d'un bouche 120 dépend de la dépression sur son côté aval par rapport à la pression atmosphérique dans le local, côté amont, on conçoit que cette dépression doit être suffisante pour assurer le débit d'air nominal Qn, en pratique une dépression, ou pression différentielle PDs, d'au moins 60 voire 80 Pascal. On conçoit que le niveau de colmatage du filtre à air 130 associé à la bouche 120 tend à faire remonter les valeurs requises de pression différentielle PDs.

Sur la figure 1, la bouche 239, en extrémité amont, fermée, de la colonne 23, est supposée être la bouche la plus défavorisée, c'est-à-dire celle dont le trajet (23, 20) la reliant au caisson 2 correspond à une perte de charge maximale. Cette perte de charge, qui est due à celle dans la branche 20 et aussi dans la colonne 23, compte tenu de leur section et de leur forme de cheminement, dépend aussi du nombre des éventuelles autres bouches 120 ouvertes, et de leurs positions. On conçoit facilement que si toutes les bouches 231, 232 et autres de la colonne 23 sont ouvertes, le flux d'air y est alors maximal, si bien que son écoulement est ralenti de par la perte de charge maximale.

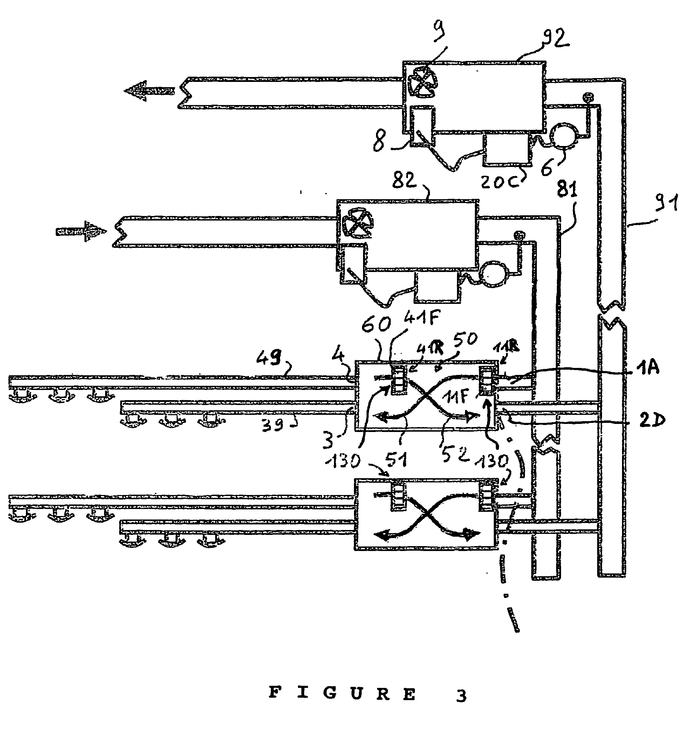

Chaque bouche 120 est équipée du filtre à air 130 pour éviter d'obstruer l'installation par des poussières grasses, se collant aux parois. C'est en particulier le cas lorsque chaque bouche 120 est reliée en entrée d'un coffret échangeur thermique à double flux, comme cela est exposé plus loin en référence à la figure 3. Le filtre est en particulier fort utile pour bloquer les fumées grasses issues des cuisines. Ainsi, de façon générale, chaque colonne est reliée à une bouche 120 à travers un filtre 130, ce filtre 130 étant intégré à la bouche 120 ou intégré au coffret d'échangeur.

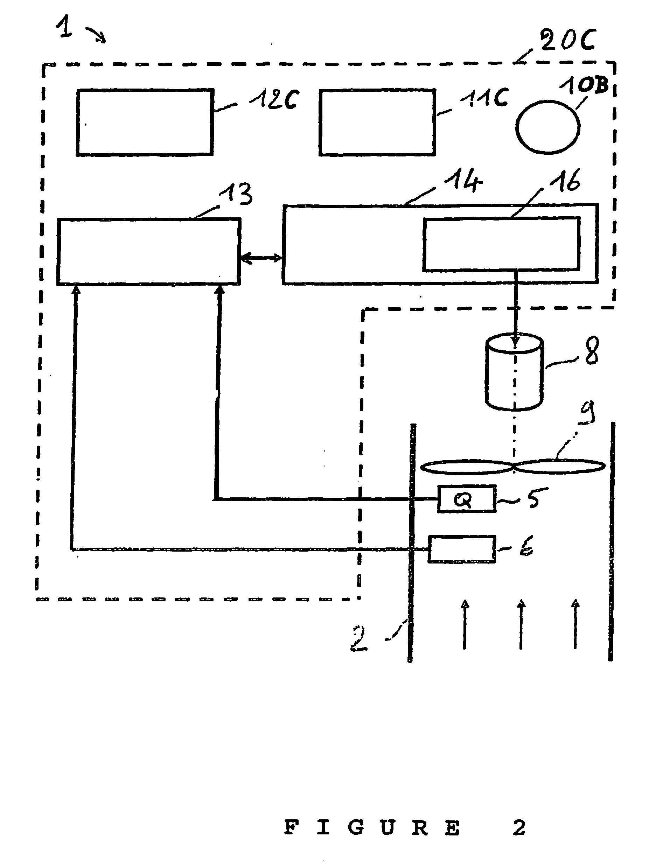

La figure 2 représente le diagramme par blocs fonctionnels illustrant la constitution du groupe de ventilation 1. Le groupe de ventilation 1 comporte une unité centrale 20C de commande du moteur 8 d'entraînement du ventilateur 9 destiné à assurer la circulation d'air dans les bouches 120 qui présentent une certaine répartition le long de la colonne considérée.

L'unité centrale 20C comporte une base de temps 10B pilotant un bloc de calcul 11C associé à des circuits séquenceurs 12C gérant les étapes du procédé selon l'invention. Les circuits séquenceurs 12C pilotent des circuits d'asservissement 13 commandant des circuits 14 de réglage de la puissance du ventilateur 9, à travers une commande du moteur 8. Les circuits de réglage 14 comportent des circuits 16 d'alimentation variable du moteur 8. Un débitmètre 5 et un capteur de pression 6 mesurent les deux variables considérées au niveau du ventilateur 9, en amont au moins en ce qui concerne le capteur de pression 6, pour fournir les mesures correspondantes aux circuits d'asservissement 13.

Comme évoqué, la dépression P ci-dessus serait une surpression dans le cas d'une installation d'insufflation d'air. Dans les deux cas, il s'agit donc d'un accroissement de l'écart absolu de la pression utile courante par rapport à la pression atmosphérique, des deux côtés respectifs du ventilateur 9.

La figure 3 représente schématiquement une installation comportant deux architectures jumelées, à savoir une installation en réseau ramifié d'aspiration d'air provenant des appartements et une installation duale d'insufflation d'air dans ceux-ci.

Cette seconde installation présente une architecture du même type que l'installation d'aspiration, la seule différence étant que le ventilateur 9 considéré fournit une surpression dans les colonnes d'insufflation.

Pour limiter la perte thermique liée à l'extraction de l'air de chaque appartement, chacun de ceux-ci est équipé d'un coffret interne échangeur thermique bidirectionnel 60. Le coffret 60, à fonctionnement statique ou rotatif, à double flux est relié, par une colonne 81, d'insufflation, à un caisson externe commun d'insufflation 82, situé par exemple en terrasse, aspirant l'air de l'atmosphère. Symétriquement, une colonne 91, d'extraction, relie le coffret 60 à un caisson externe commun d'extraction d'air 92, référencé 2 sur la figure 1.

Le coffret 60 contient un échangeur thermique double flux 50 alimenté en air neuf par la colonne externe 81, d'insufflation d'air, à travers une arrivée 1A, ou liaison d'entrée externe. L'arrivée 1A est reliée à une bouche de sortie 3, d'insufflation interne, côté appartement, se poursuivant par une conduite ou gaine 39 allant dans la ou les pièces voulues, la liaison ci-dessus s'effectuant à travers un premier circuit 51 de l'échangeur 50. De façon symétriquement croisée, une gaine 49 d'extraction d'air vicié d'une ou plusieurs pièces aboutit à une bouche d'entrée interne 4 du coffret 60, d'extraction interne, qui, à travers un second circuit 52 thermiquement couplé au premier circuit 51, rejoint un départ 2D, c'est-à-dire une liaison de sortie externe, relié à la colonne externe 91 d'aspiration d'air vicié. D'une façon générale, le nombre de bouches 120 côté interne peut être accru selon les besoins.

Les références 11R et 41R désignent une paire d'emplacements de réception de filtres à air 11F, 41F, permettant de monter deux tels filtres dans les emplacements d'entrée 11R et 41R, c'est-à-dire pour chaque sens et à chaque fois en amont de l'échangeur 50.

Le fonctionnement de l'installation d'aspiration d'air va d'abord être exposé en ce qui concerne l'allure générale d'une courbe de régulation dépression P / débit d'air Q. La dépression P deviendrait une surpression dans le cas d'une insufflation d'air.

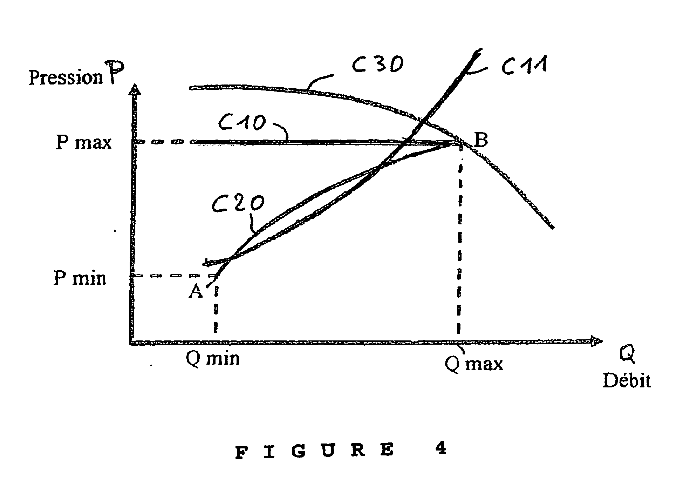

La figure 4 illustre l'allure de deux types classiques de courbes de consigne de (dé)pression P par rapport au débit d'air Q qui peuvent être imposées au ventilateur 9.

A titre liminaire, il a été dessiné une courbe C30 qui représente la réponse naturelle dépression P / débit d'air Q du ventilateur 9, présentant une première partie sensiblement horizontale, précisément à dépression P à pente qui n'est que très légèrement négative, suivie d'une seconde partie à pente devenant de plus en plus négative pour un débit d'air Q croissant, c'est-à-dire que le ventilateur 9 est en limite de puissance. Les courbes de consigne, qui ont pour but d'éviter un fonctionnement permanent à puissance maximale, sont donc situées sous la courbe de réponse naturelle C30.

La première courbe de consigne C10, "horizontale", est une régulation à dépression P dite constante, en imposant une valeur de dépression P maximale, c'est-à-dire garantissant au moins le niveau suffisant de pression différentielle au niveau de chaque bouche 120, et ceci même si toutes celles-ci sont ouvertes dans la colonne 91 considérée, donc avec une perte de charge maximale.

La courbe C11 est une courbe de variante, qui indique la puissance d'entraînement du ventilateur 9, qui, elle, est croissante avec le travail à fournir, c'est-à-dire l'évacuation d'une masse croissante d'air par unité de temps. La puissance d'entraînement ci-dessus correspond par exemple au courant ou la tension ou puissance d'alimentation du moteur 8 ou encore à une fréquence de rotation Fr qui lui est imposée, c'est-à-dire un paramètre en amont de celui-ci, ou correspond à un couple moteur qu'il fournit en sortie par un arbre d'entraînement du ventilateur 9. Tous les paramètres ci-dessus sont donc des paramètres amont du ventilateur 9.

La seconde courbe de consigne C20 est une régulation à dépression P croissante avec le débit d'air Q. En effet, un très faible débit d'air Q traduit le fait que certaines des bouches 120 d'une même colonne sont fermées, de sorte que la perte de charge dans les colonnes n'excède pas une certaine limite. Il est donc inutile de chercher à compenser, par une dépression P élevée, une perte de charge qui est inexistante au-delà de cette limite, que l'on peut estimer. La courbe de montée de la dépression P est toutefois prévue relativement raide au départ car il n'est pas à exclure qu'un débit d'air Q, détecté comme étant modéré, provienne d'une seule colonne, avec donc une perte de charge élevée. La courbe C20 apporte donc, par rapport à la courbe "horizontale" C10, une amélioration, quant au rendement énergétique de l'installation, qui donc est limitée à la zone de fonctionnement de quasi repos, et qui, en outre, n'est pas totalement optimale.

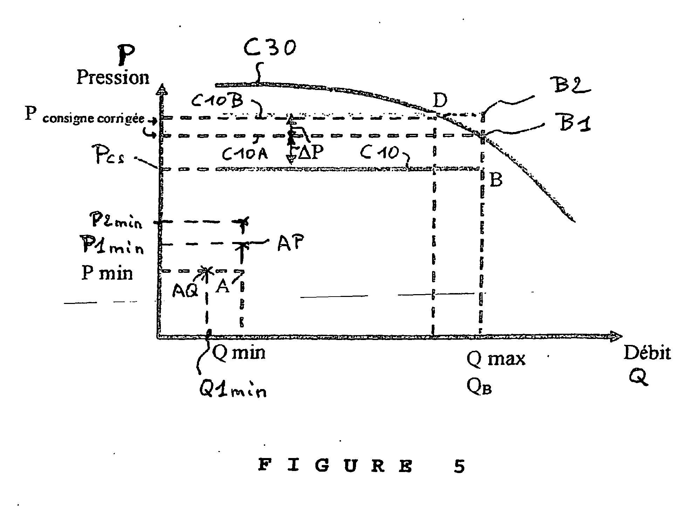

La figure 5 représente un premier exemple de régulation, à dépression P dite constante, dans lequel la dépression P est maintenue à une valeur de consigne Pcs sur une plage de débits d'air allant d'un débit d'air minimal Qmin à un débit d'air maximal Qmax, définissant un point B de limite supérieure de la plage ci-dessus. A titre indicatif, le point référencé A, au débit d'air Qmin, représente le besoin réel minimal de dépression Pmin, c'est-à-dire que la courbe de consigne est bien au dessus du besoin réel usuel pour les faibles débits d'air Q.

Si les filtres 130 subissent progressivement un colmatage, la perte de charge s'accroît de même au niveau de chaque coffret d'appartement 60. Si l'installation fonctionne à faible débit d'air Q, ce supplément de perte de charge n'est pas perçu puisqu'il existe une forte marge de dépression. Par contre, à fort débit d'air Q, pour lequel les colonnes présentent une forte perte de charge, le débit d'air individuel minimal, ou nominal Qn, devant transiter dans les circuits 51, 52 risque de ne plus être assuré.

En pareil cas, la valeur de consigne de dépression Pcs est à accroître d'une quantité de valeur oP dont l'amplitude permet de compenser le supplément de perte de charge ci-dessus. On aura compris que cette amplitude croît au fil du temps, c'est-à-dire du colmatage progressif des filtres 130, et seul le nettoyage ou le remplacement d'au moins certains de ceux-ci permet d'autoriser un retour vers, et éventuellement jusqu'à, la valeur de consigne initiale. Comme le montre la figure 5, la remontée de la courbe de consigne amène celle-ci à atteindre la courbe naturelle C30, c'est-à-dire que le point B, de limite supérieure, vient prendre contact en premier (point B1 d'extrémité maximale d'une courbe de consigne C10A remplaçant la courbe C10) avec la courbe naturelle C30. Si la remontée de la courbe de consigne doit se poursuivre (courbe C10B), on voit ainsi qu'un tronçon d'extrémité supérieure D-B2 de la courbe de consigne passe au-dessus de la courbe naturelle C30, le tronçon d'extrémité supérieure D-B2 s'agrandissant progressivement avec cette remontée, puisque le point de croisement D glisse vers les plus faibles valeurs de débit d'air Q. Le tronçon d'extrémité supérieure D-B2 représente donc un tronçon fonctionnellement disparu et donc devenu inutilisable puisqu'il excède la capacité de réponse du ventilateur 9. L'installation risque donc de ne pas assurer le service voulu à fort débit d'air global Q, c'est-à-dire que le débit d'air individuel dans les coffrets 60 les plus défavorisés, en extrémité inférieure de colonne 91, sera inférieur à la valeur nominale Qn à garantir.

Il s'agit donc de déterminer la valeur $\Delta P$ d'accroissement de pression, ou ici de dépression, à appliquer à un instant donné après un certain temps de fonctionnement de l'installation. Plusieurs solutions sont possibles. Ces solutions sont ici exposées en référence à l'installation d'extraction d'air vicié. On comprendra que l'exposé correspondant est transposable à l'installation d'insufflation d'air frais à travers les filtres 11F d'entrée externe. Il en est de même pour des filtres à air communs situés en entrée des caissons 82, 92.

La valeur $\Delta P$ peut venir s'ajouter à toute courbe de consigne, comme par exemple la courbe de consigne C10 à (dé)pression P constante ou la courbe de consigne C20 à (dé)pression croissant avec le débit d'air Q.

Selon une première solution, il peut être prévu d'effectuer une correction sur une base temporelle. A cet effet, dans une installation test du même type, on effectue initialement des relevés de colmatage des filtres 130 sur une certaine durée, par exemple plusieurs mois, en notant de préférence les conditions d'utilisation, ou paramètres d'environnement, comme par exemple le débit de renouvellement de l'air ou encore un taux moyen de pollution de l'air vicié en particules qui vont être piégées dans le filtre 41 F de l'entrée interne 4 par unité de temps, correspondant à un taux horaire ou journalier ou mensuel de colmatage du filtre 41F. On établit ainsi initialement une table de prédiction de taux temporel de colmatage, c'est-à-dire sa croissance en fonction du temps t, qui est utilisée dans la présente installation pour définir une valeur de perte de charge $\Delta Pm$ en fonction du débit d'air Qm dans le filtre 41 F considéré. La valeur $\Delta P$ est alors calculée par la formule :

$$\Delta P = \Delta Pm \times (Q_{BL} / Qm)^2$$

La référence $Q_{BL}$ désigne le débit d'air le plus grand parmi l'ensemble des débits d'air maximaux des bouches 120 des logements respectifs.

La perte de charge mesurée est corrigée, c'est-à-dire normée, pour qu'elle corresponde au débit d'air individuel maximal, puisque, après la mesure, ce débit d'air individuel maximal doit pouvoir être assuré à tout moment ultérieur.

La nouvelle pression de consigne Pcs vaut donc :

$$P_B + \Delta P$$

c'est-à-dire la valeur de dépression initiale $P_B$ du point B, augmentée de $\Delta P$.

D'une façon générale, la valeur $\Delta P$ ainsi calculée peut constituer une constante de décalage, en remontée, de la courbe C10 à (dé)pression constante ou de la courbe à pression croissante C20. Toutefois, comme l'évoque la nouvelle courbe de consigne C20A, qui diverge par rapport à la courbe de consigne précédente C20, il peut être prévu que la correction $\Delta P$ soit croissante avec le débit d'air Q, c'est-à-dire qu'elle soit d'amplitude réduite lorsque le débit d'air Q est faible. Ainsi, de façon générale, si l'on part d'une loi de régulation P = f(Q), on peut la faire évoluer en une loi P1= f(Q) + $\Delta P$(Q) ou bien en une loi P'1 = f'(Q), où la fonction f'(Q) présente une "sensibilité" accrue, c'est-à-dire, pour toute valeur du débit d'air Q, une valeur accrue de (dé)pression P.

Les paramètres d'environnement sont pris en compte pour moduler la valeur de taux de colmatage, c'est-à-dire que, si l'appartement considéré dans la présente installation est estimé ne présenter qu'un taux temporel de colmatage qui ne représente qu'une fraction 1/N du taux "standard" dans la table, le temps t à prendre en compte pour lire la table est à diviser par cette fraction, c'est-à-dire qu'il devient t x N. En bref, l'écoulement du temps de la table est considéré, lors de la lecture, comme ayant ralenti lorsque le taux temporel de colmatage d'un appartement particulier est inférieur au taux standard.

Selon une deuxième solution, on effectue une mesure directe en équipant les filtres 41 F de capteurs de pression dont la mesure permet de déterminer une valeur de pression différentielle sur le filtre pour un débit d'air connu. Précisément, si le filtre 41 F se colmate progressivement, le débit d'air individuel qui le traverse va diminuer, à pression différentielle déterminée.

Si la colonne correspondante 91 présente alors un débit d'air global qui est élevé, donc une forte perte de charge, le débit d'air global de la colonne 91 ne sera que "faiblement" réduit du fait du colmatage du filtre 41F, puisque la perte de charge locale dans le coffret 60 considéré, et l'accroissement de celle-ci, ne représentent qu'une faible fraction de la perte de charge totale dans la colonne 91. Si, au contraire, le débit d'air global de la colonne 91 est alors faible, l'accroissement de perte de charge dans le coffret 60 se traduit par une diminution plus marquée du débit d'air dans la colonne considérée 91, et donc aussi dans le coffret 60. Si par exemple le coffret 60 correspond à un débit d'air constant et à une variation de dépression restant constante sur par exemple 1 heure, on peut relever une moyenne glissante de l'évolution des conditions de fonctionnement sur plusieurs semaines pour traduire cette évolution en une commande de dérive d'augmentation de la valeur absolue de la (dé)pression P du ventilateur 9.

La mesure du débit d'air individuel au niveau d'un filtre 41 F peut s'effectuer par un capteur de débit d'air associé à celui-ci. Toutefois, il peut aussi être prévu de "fermer" temporairement tous les coffrets 60 hormis celui que l'on veut tester, pour qu'ainsi la mesure du débit d'air global Q, au niveau du caisson d'extraction 92, fournisse une mesure du débit d'air individuel du filtre 41F considéré. Le niveau des fuites de l'installation aura préalablement été mesuré sur toute la plage d'évolution de la pression de consigne Pcs pour corriger d'autant la mesure de débit d'air global Q, afin d'obtenir la valeur précise du débit d'air individuel du filtre 41F, qui, associée à la pression différentielle sur celui-ci, permet de calculer un taux de colmatage.

Une troisième solution consiste à effectuer une mesure indirecte du taux de colmatage de l'ensemble des filtres 41 F. Le principe est de déterminer si l'installation est toujours apte à présenter la dynamique de débits d'air Q prévue entre le débit d'air minimal Qmin et le débit d'air maximal Qmax, et ceci pour respectivement la dépression Pmin et la dépression Pcs. Ainsi, la nuit, les bouches d'air 120 sont usuellement à l'état dit fermé, ne laissant passer qu'un débit d'air Q d'étiage, de sorte que l'installation se trouve fonctionner en un point parfaitement connu, en l'absence de colmatage, qui est le point A. Si toutefois les filtres 41F présentent un début de colmatage, la dépression minimale Pmin est alors insuffisante pour assurer le débit d'air minimal Qmin. Un décrochage temporaire faisant passer de la courbe de consigne, normalement à pression constante $P_B$, à la valeur de dépression Pmin permet ainsi de mesurer un débit d'air Q1min (point AQ d'une courbe de réponse actuelle Cx) inférieur à la valeur Qmin mesurée lors de la mise en service, du fait de la perte de charge due au colmatage. La dérive négative Q1min - Qmin de la variable dont il faut assurer la valeur, c'est-à-dire le débit d'air Q, croît ainsi en valeur absolue au fil du temps t, avec la croissance du taux de colmatage. Bien évidemment, si le taux de colmatage décroît, du fait du nettoyage ou du remplacement de filtres 41F, le sens de la dérive ci-dessus s'inverse, c'est-à-dire que la valeur absolue du niveau de colmatage diminue.

En variante, au lieu de fixer la pression à Pmin pour alors mesurer la dérive de Qmin, on peut prévoir une approche duale, c'est-à-dire asservir le caisson 92 selon une courbe de réponse à débit d'air Q cible, par exemple, la nuit, de valeur Qmin ou une valeur proche qui correspond à la valeur courante mesurée Qm. Il s'agit donc alors temporairement d'une régulation à débit d'air Q constant, correspondant au besoin instantané réel. Cette régulation, à la valeur cible du débit d'air Qm requis, fait donc appel à un asservissement de la dépression P, en commandant son évolution pour que le débit d'air Qm soit assuré.

En pareil cas, l'asservissement doit commander un réglage à une dépression P1 min d'amplitude supérieure à Pmin, pour compenser le supplément de perte de charge dû au colmatage. Il s'agit donc d'une dérive positive P1min - Pmin de l'amplitude de la variable de commande que constitue la dépression P. En l'absence de correction, la valeur absolue de dépression P tend donc à décroître, dans cet exemple à fonctionnement en aspiration. Hormis la correction d'augmentation de l'amplitude de la dépression P, on maintient en outre une marge de sécurité.

De façon générale, on peut jouer simultanément sur les deux variables dépression P et débit d'air Q pour déterminer un point de fonctionnement afin de mesurer sa distance à une courbe initiale dépression P / débit d'air Q, c'est-à-dire établie alors que les filtres 41 F sont propres. La distance ainsi mesurée correspond à une certaine dérive de dépression P et une certaine dérive de débit d'air Q, chacune de ces dérives présentant une certaine "sensibilité" par rapport à l'autre, puisque la dérive négative Q1min - Qmin et la dérive d'amplitude positive P1min - Pmin représentent chacune le même phénomène de colmatage, et ceci autour du même point de fonctionnement A. Ayant ainsi établi la pente, ou coefficient de correspondance, entre ces deux variables P et Q, on peut donc ramener une dite mesure de distance, effectuée au moyen de ces deux variables P, Q, à une valeur de dérive équivalente de l'une quelconque de ces deux variables P, Q.

Le taux de colmatage étant ici croissant, on augmente alors le niveaux de la pression de consigne courante Pcs d'une valeur de correction

$$\Delta P = (P1min - Pmin) \times (Q_{BL} / Qmin)^2$$

P1min est donc la valeur de mise à jour de Pmin.

Une telle correction peut être effectuée cycliquement, depuis la valeur initiale $P_B$, par ajout de valeurs de recalage ΔP, comme évoqué sur la figure 5. Dans la formule ci-dessus, de premier décalage de dépression ΔP, il convient ensuite, pour les recalages suivants, de décaler la référence de dépression, c'est-à-dire que Pmin y est à remplacer par sa valeurs de mise à jour P1min, et P1min y est à remplacer par une valeur de dépression P2min, représentant la mise à jour de P1min.

La correction ΔP de la dépression de consigne peut en outre être comparée à une valeur de seuil maximal de correction pour engendrer une alarme si le seuil est dépassé, ce qui signifie que le ventilateur 9 est utilisé à la limite de ses possibilités pour le débit d'air maximal Qmax, et donc que ce débit d'air maximal Qmax ne pourra plus être garanti à l'avenir. Il faut donc intervenir pour changer les filtres 41F, ou au moins certains d'entre eux.

De façon quelque peu symétrique, on peut surveiller le fonctionnement à fort débit d'air Q, c'est-à-dire à proximité du point B dont la mesure du niveau de dépression P est moins sensible au "bruit", dû aux aléas d'utilisation des bouches 120, que ne l'est le point A, dont la position suppose que toutes les bouches 120 sont en position de fermeture. Un tel état de fort débit d'air Q se présente par exemple aux heures des repas, lorsque les occupants commandent l'ouverture maximale des bouches de cuisine. On établit un historique de la position du point de fonctionnement, c'est-à-dire le débit d'air Q et la dépression P correspondante, supposée rester fixée à la valeur de consigne Pcs.

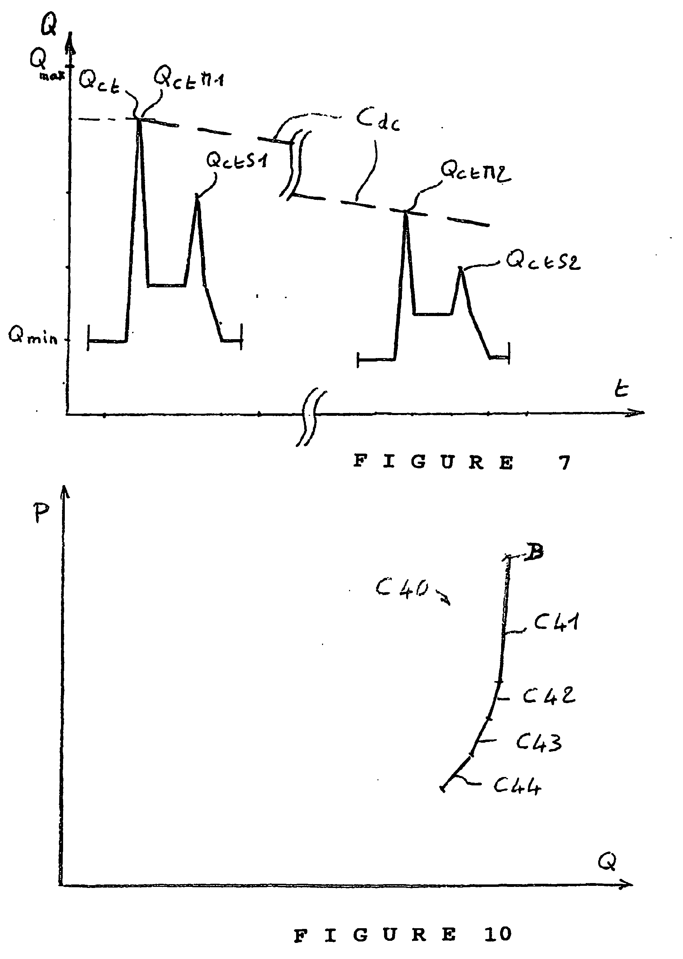

Ainsi, la figure 7 représente, de façon très schématique, le débit d'air Q instantané en fonction du temps t, avec une représentation de l'évolution du débit d'air Q quotidien relatif à deux jours distants d'un ou plusieurs mois.

On a vu plus haut que la dynamique d'utilisation de l'installation a tendance à s'étendre du côté des faibles débits d'air Q, c'est-à-dire que la plage requise de débits d'air Qmin à Qmax tend à dériver vers des valeurs inférieures, puisque la perte de charge croît avec le colmatage.

Le premier jour, de démarrage de l'installation, présente des crêtes Qct de débit d'air Q, avec une première crête QctM1 dans l'heure de midi et une seconde crête QctS 1, ici supposée de plus faible amplitude, le soir, avec ensuite retombée au niveau minimal Qmin la nuit.

Le même genre de tracé pour le jour ultérieur présente globalement la même forme mais avec des amplitudes de débit d'air Q qui sont moindres pour des crêtes de midi QctM2 et du soir QctS2. Chacun de ces tracés peut être une moyenne établie sur plusieurs jours successifs.

On peut ainsi observer les crêtes Qct de débit d'air Q au fil des jours pour y rechercher une courbe Cdc de décroissance du débit d'air crête Qct dont la pente négative traduit le fait que les filtres 41 F se colmatent, c'est-à-dire que la dynamique se restreint progressivement du côté des forts débits d'air Q. De façon plus générale, pour s'affranchir du fait que la valeur maximale QctM2 est susceptible de varier d'un jour à l'autre du fait de décalages dans les heures de repas des personnes, on peut comparer le tracé global du jour ultérieur au tracé du premier jour pour ainsi utiliser toutes les informations correspondantes, tout au long du jour, c'est-à-dire intégrer ces informations, et ainsi mieux s'affranchir du "bruit" sur la valeur instantanée du débit d'air Q dû aux incertitudes ci-dessus. On détermine ainsi la quantité de débit d'air Q dont il faut descendre le tracé du premier jour pour le cadrer sur le tracé du jour ultérieur. Ce cadrage "en hauteur" peut par exemple consister à déterminer le minimum d'une somme d'écarts de débit d'air Q d'une suite de points homologues (même heure), c'est-à-dire que l'on superpose les deux courbes journalières sur une même période d'une journée. La courbe de décroissance Cdc peut alors passer par une paire de points homologues quelconques, c'est-à-dire se trouver à une hauteur quelconque, puisque c'est sa pente qui importe, cette pente déterminant le sens de la dérive du colmatage, et l'intégrale de cette pente, c'est-à-dire le décalage de hauteur des deux tracés journaliers, est représentative du taux de colmatage.

Pour que les mesures soient moins sensibles aux incertitudes de simultanéité d'ouverture de toutes les bouches 120, fournissant les valeurs crête de débit d'air, il est préférable d'effectuer une intégration, de la valeur de débit d'air mesurée, sur plusieurs dizaines de minutes, par exemple une ou deux heures, dans les périodes des repas. C'est donc alors toute la zone de sommet de la courbe de débit d'air qui fournit l'information voulue, de débit d'air crête moyen, qui est ensuite exploitée de façon statistique pour déterminer si les sommets ultérieurs s'écartent de façon notable de la valeur moyenne de référence.

Ainsi, le bloc de calcul 11C

- on mémorise une valeur moyenne de l'un des dits paramètres sur une plage horaire prédéterminée et sur une durée représentant plusieurs cycles d'utilisation de l'installation, et
- il détermine de même, sur un dit cycle, postérieur, une dite valeur moyenne courante du paramètre P ou Q,
- et une étape c), précisée plus loin, de détermination de direction de dérive de colmatage, est effectuée d'après les dites valeurs moyennes, respectivement mémorisée et courante.

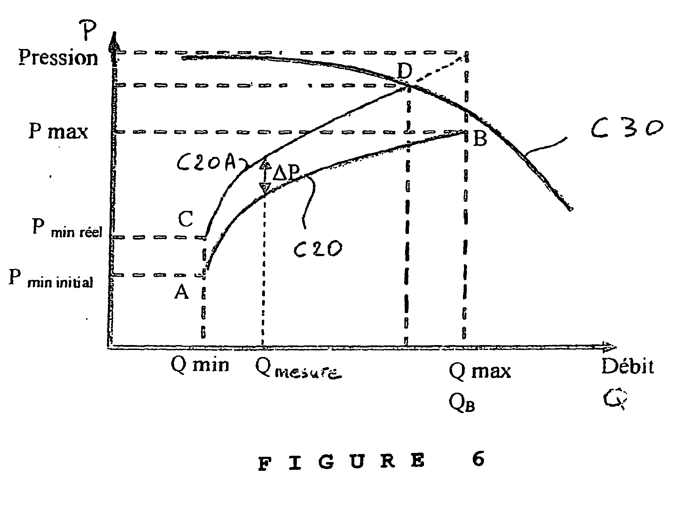

Dans le cas d'une régulation à (dé)pression P croissante en fonction du débit d'air Q, la courbe de consigne horizontale, à pression Pcs, est remplacée par une dite courbe de consigne C20 à croissance monotone selon la figure 6, partant du dit point minimal A pour aboutir au point maximal B. La courbe de consigne C20 présente une allure très approximativement de parabole à axe horizontal, selon l'axe des débits d'air Q, avec ainsi une pente maximale de croissance pour les faibles débits d'air Q, cette pente décroissant progressivement pour les forts débits d'air Q. Cette courbe est une courbe enveloppe des besoins possibles en débit d'air Q, c'est-à-dire que la dépression P est considérée comme étant suffisante pour assurer, dans la plupart des configurations possibles de répartition de bouches 120 ouvertes, au moins le débit d'air nominal Qn requis dans les coffrets 60, même ceux qui sont les plus défavorisés, c'est-à-dire situés en bas des colonnes 91. Ainsi, pour les faibles débits d'air Q, c'est-à-dire un faible nombre de bouches 120 ouvertes, pour lesquels la loi des grands nombres ne joue pas, on prend une marge de sécurité accrue par rapport à un cas "moyen", afin d'assurer le débit d'air individuel requis Qn même si quasiment toutes les bouches 120 sont "lointaines" par rapport au caisson 92, c'est-à-dire défavorisées. Ceci explique pourquoi la courbe C20 présente une forte pente initiale.

La détermination du sens de la dérive et du taux de colmatage des filtres 41 F s'effectue comme exposé précédemment. Pour la correction de la dépression P, neutralisant l'effet du colmatage, la seule différence est ici qu'il est préférable que le supplément de dépression oP soit de valeur croissante avec le débit d'air Q, c'est-à-dire que la nouvelle courbe de consigne C20A, située au-dessus de la courbe de consigne d'origine C20, diverge par rapport à celle-ci. En effet, un débit d'air Q élevé signifie qu'un grand nombre de bouches 120 sont ouvertes et donc qu'il faut vaincre le colmatage d'un grand nombre de filtres 41 F. Le supplément de dépression $\Delta P$ peut, par exemple, varier de façon quadratique en fonction du débit d'air Q.

Dans le cas de la régulation à (dé)pression P croissante en fonction du débit d'air Q, selon la figure 6, le débit d'air Q sur la figure 7 peut être remplacé par un tracé de la (dé)pression P, puisque les points extrêmes A et B de la courbe C20 dérivent aussi en (dé)pression P (Pmin et Pmax). Dans le cas d'une régulation à débit d'air Q "constant" par périodes, et régulé par sauts vers à chaque fois une valeur convenable, une alarme est engendrée lorsque le besoin en dépression excède les possibilités du ventilateur 9.

Divers modes de mise en oeuvre du procédé de l'invention ayant ainsi été exposés, le procédé de l'invention va maintenant être exposé de façon générique.

Il s'agit d'un procédé d'estimation de l'évolution d'un niveau de colmatage de filtres à air 11F, 41 F, 130 installés dans divers locaux et reliés à une installation formée d'au moins une conduite, ou colonne, d'échange d'air 81, 91, activée par le ventilateur 9 entraîné par le moteur 8, caractérisé par la suite des étapes suivantes :

a) à un instant initial T0, les circuits d'asservissement 13 déterminent et mémorisent un jeu initial J0 de valeurs de paramètres associés de fonctionnement de l'installation Y, paramètres Y comprenant un paramètre de débit d'air instantané Q assuré par le ventilateur 9 et au moins un paramètre instantané associé ((dé)pression P, puissance électrique W, couple de sortie, fréquence de rotation Fr, intensité 1 du courant consommé par le moteur) de fonctionnement du ventilateur 9 pour assurer le débit d'air instantané considéré Q, les paramètres associés (P, W, couple, Fr, I) variant de façon corrélée pour définir une dite courbe de réponse, initiale, C 10, C20 prévue pour l'installation,

b) à un instant courant Tx, les circuits d'asservissement 13 déterminent des valeurs courantes Vx des dits paramètres Y pour un point de fonctionnement courant Fx (du genre du point AQ) sur une dite courbe de réponse, actuelle, Cx,

c) le bloc de calcul 11C, ayant reçu les informations voulues en provenance des circuits d'asservissement 13, compare les valeurs courantes Vx au jeu initial J0 pour déterminer une direction de dérive du point de fonctionnement courant Fx par rapport à la courbe de réponse initiale C10, C20, et

d) le bloc de calcul 11C détermine un sens d'évolution du niveau de colmatage d'après la direction de la dérive.

Comme évoqué plus haut, les paramètres de fonctionnement de l'installation comprennent, d'une part, le débit instantané Q de l'air collecté par le ventilateur 9, c'est-à-dire un paramètre "de sortie", ou aval, du ventilateur. 9 correspondant au service rendu, et, d'autre part, des paramètres, "amont", de commande de fonctionnement du ventilateur 9, c'est-à-dire des paramètres liés à la puissance d'entraînement appliquée au ventilateur 9 pour qu'il fournisse la valeurs voulue de son paramètre aval, c'est-à-dire la valeur de dépression P voulue sur la courbe de consigne d'asservissement.

Le jeu initial J0 de valeurs de paramètres associés peut ne définir qu'un point de la courbe de consigne C10, C20 sur laquelle il se trouve, mais il sera alors préférable que la comparaison à l'étape c) soit effectuée à un instant pour lequel l'une des valeurs courantes ultérieures Vx est alors de valeur sensiblement égale à la valeur initiale du paramètre considéré.

Pour ce faire, les instants initial et courant sont de préférence choisis à une période de la journée où le besoin en débit est stable. En particulier, les instants initial et courant peuvent être choisis la nuit, car le besoin en débit pour l'installation est alors sensiblement constant d'une journée à l'autre. Par exemple, en choisissant l'instant initial et courant durant la nuit, le besoin en débit à ces instants peut être égal au débit minimal de l'installation, car aucun occupant ne demande alors un débit de ventilation.

Si l'allure de la courbe de consigne est connue, on peut toutefois, par extrapolation depuis le point défini par le jeu initial J0, déterminer la position d'un tronçon de la courbe de consigne telle que suivie initialement, c'est-à-dire une courbe de réponse identique à la courbe de consigne. La courbe de réponse va toutefois dériver à mesure que se colmatent les filtres.

Il faut donc noter que, pour les paramètres amont du ventilateur 9, déterminant sa puissance d'entraînement, la notion de courbe de réponse est à considérer dans un sens opposé au sens classique, c'est-à-dire que, la courbe de consigne dépression P / débit d'air Q restant parfaitement respectée, il s'agit de déterminer la dérive qu'introduit, intrinsèquement et volontairement, l'asservissement pour pouvoir maintenir le niveau courant de dépression P voulu par la courbe de consigne.

Pour le paramètre aval, c'est-à-dire la dépression P, on note sa dérive permettant de même de suivre la courbe de consigne, dans le cas d'une régulation à dépression variable, ici croissante.

Pour préciser l'information de colmatage, afin de décider s'il faut changer des filtres, on mesure, à l'étape c), la dérive pour, à l'étape d), estimer un niveau de dérive, c'est-à-dire un taux de colmatage, selon une loi croissant avec la dérive mesurée.

La loi ci-dessus dépend du paramètre choisi et des caractéristiques du moteur 8 et du ventilateur 9. Par exemple, si l'on considère le courant ou la tension d'alimentation du moteur 8 ou encore la fréquence de rotation Fr qui lui est imposée, ce paramètre ci-dessus suit une certaine loi de croissance avec la puissance instantanée requise pour fournir le couple moteur voulu afin de produire la dépression de valeur instantanée conforme à la courbe de consigne C10, C20. Ce sont donc les caractéristiques techniques du moteur 8 et celles du ventilateur 9 qui déterminent la loi de correspondance entre le paramètre retenu et la valeur de dépression P qui y correspond.

Si c'est le couple moteur qui sert de paramètre de fonctionnement, il peut être directement mesuré et il va suivre une certaine loi de variation par rapport à la dépression que fournit le ventilateur 9. Ce sont donc alors uniquement les caractéristiques techniques du ventilateur 9 qui déterminent cette loi de correspondance.

La courbe de la loi de variation est initialement établie par des essais et mise en mémoire pour l'utiliser comme indiqué, pour transcoder la valeur de puissance du moteur 8, ou autre paramètre équivalent, ou la valeur du couple moteur, en une valeur de dépression P. En d'autres termes, on effectue le relevé d'un point de la courbe C11 (puissance d'entraînement) et on le ramène dans le système de coordonnées dépression P / débit d'air Q pour pouvoir déterminer sa distance à la courbe de consigne associée C10, C20, c'est-à-dire mesurer la dérive de la commande du ventilateur 9.

On notera toutefois que la transformation duale est envisageable, c'est-à-dire que les informations d'asservissement contenues dans la courbe de consigne C10, C20 en coordonnées dépression P / débit d'air Q peuvent aussi être contenues dans une courbe homologue "image" (C11) servant spécifiquement à la mesure de la dérive ci-dessus.

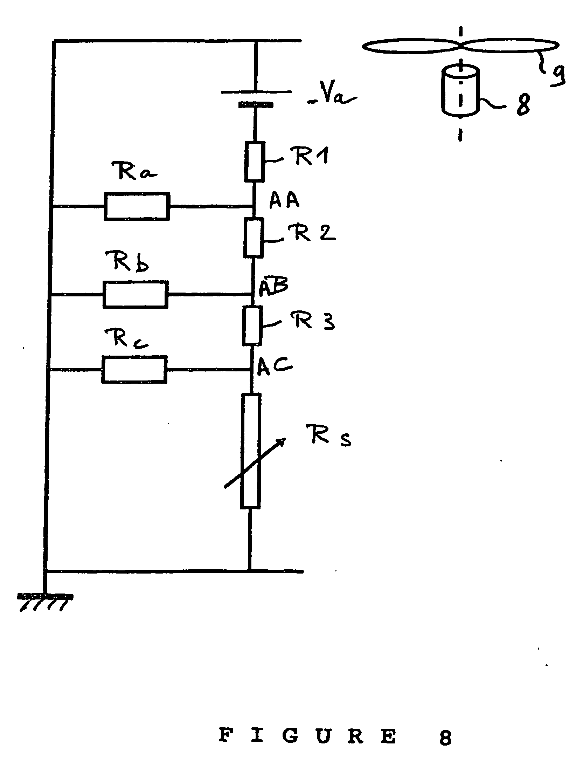

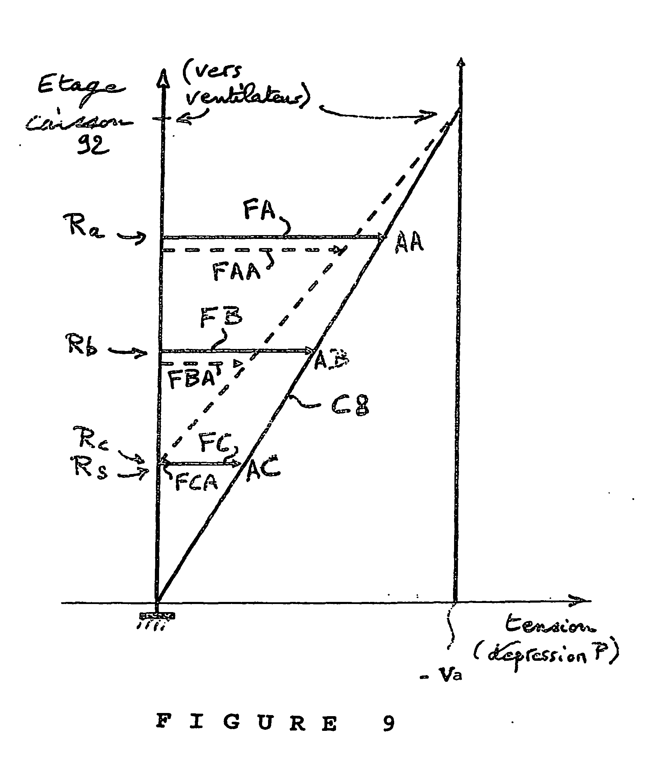

Les figures 8 et 9 illustrent une modélisation de l'installation d'extraction d'air vicié, permettant d'acquérir des informations sur l'état de la colonne 91 au niveau de chacun des appartements, le problème étant de localiser les filtres 41F encrassés, ou au moins de déterminer l'encrassement global des filtres 41 F de la colonne 91.

Selon la figure 8, la colonne 91 peut être modélisée par un tronc de résistances électriques en série, résistance R1, point AA (raccordement d'un étage supérieur), résistance R2, point AB (raccordement d'un étage intermédiaire), résistance R3, point AC bas (raccordement d'un étage inférieur), chaque résistance R1, R2, R3 représentant la perte de charge entre deux étages, dans l'ordre en partant d'une terrasse en toiture où se trouve le caisson 92. En outre, chaque bouche 120 associée à un filtre 41F d'échangeur d'étage équivaut à une résistance Ra, Rb, Rc en branche dérivée au point respectif AA ou AB ou AC, dont l'extrémité libre, côté appartement, est à la masse (atmosphère). Cette résistance d'étage Ra, Rb, Rc est variable (état ouvert ou fermé de la bouche 120). Le ventilateur d'aspiration 9 au sommet de la colonne 91 est représenté par une tension d'alimentation de polarisation négative, dont la borne supérieure est à la masse (atmosphère) comme les extrémités libres des bouches ou branches "Ra", "Rb", "Rc". Les références entre guillemets désignent l'élément dont la valeur est représentée par la référence entre ces guillemets, c'est-à-dire une bouche associée à un filtre.

Si plusieurs colonnes 11, 12 ou 91 sont en parallèle, on peut éventuellement effectuer une mesure de (dé)pression P juste en aval de chacune.

Il faut donc maintenant séparer les variables, c'est-à-dire déterminer, dans la perte de charge observée, quelle est la part de la colonne 91 et la part des branches "Ra", "Rb", "Rc".

A cet effet, si l'on injecte des stimuli (flux d'air) en un endroit connu de la colonne 91, ils vont donc perturber directement la partie aval (haut de la colonne 91), de par l'augmentation du débit d'air Q, et aussi la partie amont (en bas de colonne 91), de par la perte de charge accrue en aval.

Un premier type de stimulus peut être l'ouverture d'une bouche "Rs", pouvant être de type calibré, à perte de charge Rs, en bas de la colonne 91, c'est-à-dire son extrémité dite libre. Le flux d'air correspondant va donc perturber directement toute la colonne "R1" > "R2", "R3" et indirectement toutes les bouches "Ra" "Rb,", "Rc", comme exposé ci-dessus.

On peut, en particulier, ouvrir ainsi, par exemple par télécommande, une grosse bouche arrivée d'air de stimulus Rs, qui va faire "décrocher" certaines des bouches "Ra", "Rb", "Rc", c'est-à-dire réduire à moins de 60 Pascal la dépression dans au moins le tronçon inférieur de la colonne 91.. Le décrochage ci-dessus signifie que la bouche 120 considérée, qui comporte une languette de bridage limitant le débit d'air individuel, en étranglant le passage d'air considéré, au-dessus du seuil nominal bas de débit d'air Qn, ne fonctionne plus à débit d'air quasiment constant quelle que soit la (dé)pression P, mais qu'elle fonctionne alors avec un débit d'air individuel qui varie dans le même sens que l'amplitude de la dépression P. Les tronçons de courbe de réponse pour ces deux modes de fonctionnement respectifs se raccordent donc par une zone de coude, comme le montre la figure 10, expliquée plus loin.

Le stimulus ci-dessus permet de détecter que la bouche 120 considérée fonctionne sur l'un ou l'autre de ces deux tronçons. En effet, si l'amplitude de la dépression P n'est initialement que peu réduite, c'est-à-dire avec un faible stimulus, toutes les bouches 120 restent en fonctionnement correct, c'est-à-dire que le débit d'air Q dans la colonne 91 reste quasiment inchangé, hormis la réduction des fuites, qu'il est facile de déterminer initialement pour la plage fonctionnelle de dépression P. Par contre, si l'amplitude de la dépression P est suffisamment réduite pour qu'au moins une bouche 120 décroche, c'est-à-dire ne dispose plus d'une pression différentielle suffisante, compte tenu du colmatage, pour assurer le débit d'air nominal Qn provoquant le bridage, le débit d'air Q dans la colonne 91 va alors décroître de façon accélérée puisque l'on ne fonctionne plus à débit d'air Q constant. Le décrochage ci-dessus peut alors être lié à un colmatage du filtre 41 F associé, c'est-à-dire que la pression différentielle instantanée est peut-être supérieure à la valeur nominale de seuil bas PDs voulue pour un filtre 41 F à l'état neuf, mais que cette valeur de pression différentielle PDs est maintenant insuffisante pour assurer le débit d'air nominal individuel voulu Qn, d'actionnement de la languette de bridage, à travers le filtre 41F présentant un certain niveau de colmatage.

Si le bloc de calcul 11C connaît les réponses des divers types de bouches 120 en pareil cas, et donc en particulier la position du coude, il peut, d'après la variation observée du débit d'air Q dans la colonne 91 et de la dépression P, déterminer le nombre de bouches 120 ouvertes et leurs positions puisque la signature de réponse en décrochage de chaque bouche 130 est perçue à travers une perte de charge instantanée qui est propre à chacune.

En d'autres termes, le bloc de calcul 11C détermine, au niveau de sortie (caisson 92) de la colonne 91, la courbe de réponse composite des diverses bouches 120, et cette courbe de réponse est une signature de l'état ouvert ou fermé des bouches 120 et de leur type. Cette courbe de réponse composite présente ainsi une succession de coudes correspondant chacun à un décrochage d'une bouche 120. Si tous les filtres 41F présentent un même niveau de colmatage, ce sont donc les bouches 120 les plus défavorisées qui vont décrocher les premières et autres vont suivre, à la façon de dominos dressés et tombant en cascade, présentant ainsi la succession de coudes ci-dessus.

Selon le modèle électrique ci-dessus, on a donc une colonne vertébrale de résistances en série "Ra", "Rb", "Rc", dont le sommet est tiré à une tension négative par une borne inférieure d'une source d'alimentation en tension Va (= dépression fixe) (tension Va éventuellement modulée) dont la borne supérieure est à la masse, c'est-à-dire reliée aux extrémités libres des branches "Ra", "Rb", "Rc". La bouche d'injection de stimuli "Rs" est une résistance variable (potentiomètre) branchée entre la masse et le point bas AC de la colonne 91.

A l'état fermé de cette bouche basse "Rs", le point bas AC de la colonne 91 (point de raccordement de la bouche "Rc", la plus défavorisée) est à un certain potentiel, suffisamment négatif, c'est-à-dire correspondant au moins à une chute de 60 à 80 Pascal. Le reste de la chute de tension, pour descendre à la tension d'alimentation -Va, est réparti sur les résistances R3, R2, R1, cette répartition dépendant de l'état des diverses bouches 120.

La figure 9 représente, en abscisse, la tension (représentant l'amplitude de la dépression P) au niveau des divers étages, en ordonnée.

Pour simplifier l'exposé, on a supposé que la perte de charge est linéaire en fonction du débit d'air considéré, alors qu'en fait elle est quadratique.

La courbe oblique en trait plein C8, de tension en fonction de l'étage, délimite, avec l'axe des ordonnées, trois vecteurs selon les flèches horizontales FC, FB, FA, qui représentent chacune l'amplitude de la tension (ou dépression P) au point respectif correspondant AC, AB, AA. On voit ainsi que l'amplitude de la tension, ou dépression P, croît à mesure que l'on se rapproche du ventilateur 9, représenté par la source de tension -Va, la bouche "Rc" étant la plus défavorisée.

Si l'on ouvre (courbe en pointillés C8A) totalement une bouche de service "Rs", constituant une grosse prise d'air, proche de la bouche "Rc" en bas de la colonne considérée, on voit que la courbe C8A démarre en un point de tension nulle situé sensiblement au niveau du point bas AC, puisque la bouche de service "Rs" court-circuite la bouche inférieure "Rc". En d'autres termes, la dynamique de tension s'étend maintenant totalement entre la source -Va, en partie haute, et l'étage inférieur, alors que la courbe initiale C8 se poursuit en dessous de l'étage inférieur, avec donc une pente moindre que celle de la courbe C8A.

La flèche horizontale FC, de tension ou dépression P, devient ainsi une flèche FCA de longueur quasiment nulle, et les flèches FB et FA deviennent des flèches respectives FBA et FAA qui sont raccourcies.

Si la résistance de stimuli "Rs" diminue progressivement de valeur, elle écroule progressivement la tension aux bornes de "Rc", puisqu'elle est en parallèle sur "Rc". Ainsi, on peut même aller jusqu'à court-circuiter (pointillés) "Rc" si "Rs" = 0 (ouverture totale du bas de la colonne) de sorte que les résistances "Ra" et "Rb" se trouvent raccordées à une échelle de résistances R1 à R3 dont le gradient de tension est accru, puisque le reste ci-dessus est constitué alors par la totalité de la tension de polarisation - Va.

On voit donc que la tension du point AB (proche du point AC, c'est-à-dire du stimulus) va être fortement perturbée, c'est-à-dire ramenée vers la masse par "Rs", alors que "Ra" est moins affecté. On peut en particulier prévoir de faire "décrocher" "Rc" puis "Rb", si leur signature de décrochage est intéressante, c'est-à-dire si elle permet de déterminer qu'on passe par les 60 ou 80 Pascals. La bouche 120 considérée devient un indicateur de pression, au moins pour le niveau précis de décrochage.

Il peut aussi être prévu que la bouche de service "Rs" soit calibrée à un débit d'air étalon Qé, pas nécessairement supérieur au débit d'air nominal des diverses bouches 120. En pareil cas, le stimulus correspondant sera d'amplitude limitée et la bouche inférieure "Rc" ne sera pas totalement shuntée, alors que c'était le cas pour une bouche "Rs" de grande taille et non bridée. La courbe de réponse est alors intermédiaire entre les courbes C8 et C8A. L'intérêt d'un tel cas est que l'on connaît exactement l'amplitude du stimulus.

Les mesures ci-dessus sont entachées de bruit car elles portent sur éventuellement de faibles variations, et sont en outre perturbées par l'activité des bouches 120 des autres colonnes. Il est donc préférable d'utiliser le principe de l'oscilloscope à échantillonnage, c'est-à-dire de répéter cycliquement une modulation d'ouverture / fermeture de "Rs" pour lisser les résultats observés.

En variante, on reboucle successivement chacun des coffrets échangeurs individuels 60 sur lui-même, au niveau des bouches internes, de sortie 3 et d'entrée 4, pour ne conserver qu'une boucle locale au coffret 60, comportant les deux filtres 11F, 41F du coffret échangeur 60 de l'appartement. Ensuite, si l'on shunte ces filtres 11 F, 41F par un circuit de dérivation local, on peut donc déterminer la perte de charge qu'ils induisaient. De façon duale, on peut couper temporairement cette boucle locale, c'est-à-dire isoler le coffret 60 et mesurer la réponse, c'est-à-dire la modification de l'état de la colonne 91. Il faut alors, de préférence, des moyens de commande correspondants, répartis dans les étages.

Ayant ainsi prévu la bouche de service étalon "Rs", à débit d'air étalon Qé, le bloc de calcul 11C commande la commutation de son état pour passer, dans un sens quelconque connu, entre deux états extrêmes, respectivement de fermeture et d'ouverture, afin d'engendrer, à l'instant courant Tx, un décalage $\Delta Qx$ d'une valeur courante du dit débit d'air Qx du ventilateur 9, par rapport à une valeur homologue Q0 du jeu initial J0,

- et on effectue les étapes b) et suivantes.

Cette commutation d'état est effectuée de préférence la nuit, c'est-à-dire lorsque la fréquence ou probabilité de commutation des bouches 120 est faible, ce qui réduit le risque de bruit de mesure.

Le bloc de calcul 11C effectue, de préférence, une commutation progressive de débit d'air par commutation progressive de l'état de la bouche étalon de service "Rs" entre des états extrêmes, d'ouverture et de fermeture, et on effectue, en une pluralité N d'instants courants Tx, Ty, Tz, une pluralité N d'échantillonnages de la réponse de l'installation en termes de dites valeurs courantes Vx, Vy, Vz des dits paramètres Y selon l'étape b) et, d'après la pluralité de dits niveaux de dérive ainsi obtenus, on établit une courbe de sensibilité de réponse de l'installation vis-à-vis de la dite commutation de débit d'air.

En particulier :

- le bloc de calcul 11C modélise l'état d'une autre pluralité BO de filtres 41 F de la colonne 91, par une équation comportant, en variables, les niveaux respectifs de colmatage de l'autre pluralité BO de filtres 41F,
- le bloc de calcul 11C effectue une dite pluralité N d'échantillonnages au moins égale à l'autre pluralité BO de filtres 41F, et
- le bloc de calcul 11C établit ainsi au moins une dite autre pluralité BO de dites équations, ce qui permet d'en déterminer une dite autre pluralité BO de valeurs des variables de colmatage.

La modulation du débit d'air Q ainsi obtenue par commande de la bouche de service "Rs" peut être effectuée avec un fonctionnement à (dé)pression P constante, ce qui évite une interférence entre variables. Il peut toutefois être prévu de fonctionner selon une courbe de régulation prédéterminée à (dé)pression d'amplitude croissante avec le débit d'air Q, puisque, connaissant cette courbe, on pourra séparer les deux variations des deux variables P et Q.

De façon duale, le stimulus peut être une variation de la dépression P, c'est-à-dire une modulation de la tension de polarisation -Va.

En pareil cas,

- le bloc de calcul 11C fait varier, par commande des circuits d'asservissement 13, un niveau courant de pression P dans l'installation dans une plage débordant au-dessus d'une valeur de seuil minimal (PDs) de bon fonctionnement des bouches 120, associées à des filtres 41 F respectifs, à bridage du débit d'air au-delà d'un débit d'air individuel nominal Qn en cas de pression différentielle excédant une pression différentielle prédéterminée correspondant au dit seuil minimal PDs et assurant au moins le débit d'air nominal individuel Qn,
- les circuits d'asservissement 13 échantillonnent, au fil du temps, la valeur du débit d'air Q afin de mesurer une variation de débit d'air ainsi induite, pour que le bloc de calcul 11C établisse une courbe de réponse actuelle en débit d'air Q, et
- le bloc de calcul 11C repère, sur la courbe de réponse actuelle en débit d'air Q, au moins une rupture de pente correspondant à une transition entre un fonctionnement incorrect de l'une des bouches 120, à débit d'air inférieur au débit d'air nominal individuel Qn et un dit bon fonctionnement, à débit d'air individuel excédant le débit d'air nominal individuel Qn et provoquant ainsi le bridage du débit d'air, ce qui fournit une mesure de la pression différentielle de la bouche 120 considérée pour les conditions de fonctionnement de l'installation alors définies par les paramètres.

La figure 10 montre ainsi une courbe C40 de dépression P / débit d'air Q de l'installation, dans laquelle, l'état d'ouverture des diverses bouches 120 étant supposé figé, on fait varier la valeur de la dépression P en partant par exemple de la valeur maximale $P_B$. La courbe C40 présente un premier tronçon, d'extrémité supérieure, C41 pour lequel la pente $\Delta P/\Delta Q$ est maximale, puisque toutes les bouches 120 fonctionnent alors avec bridage, c'est-à-dire que leur débit d'air individuel est quasiment insensible à la valeur de la pression différentielle sur la bouche 120 considérée.

L'amplitude de la dépression P continuant à diminuer, la bouche 120 la plus défavorisée "décroche", c'est-à-dire que la valeur de son propre débit d'air individuel devient sensible à la valeur (insuffisante) de pression différentielle. La courbe composite de débit d'air Q dans la colonne 91 présente donc, sur un deuxième tronçon suivant C42, une pente plus faible que celle du premier tronçon C41, cette réduction de pente traduisant l'influence, dans le flux d'air global Q de la colonne 91, du flux individuel de la bouche 120 ayant décroché.

La diminution de l'amplitude de la dépression P se poursuivant, il apparaît ainsi un troisième tronçon C43 puis un quatrième tronçon C44 traduisant les décrochages successifs d'une deuxième et d'une troisième bouche 120, bouches parmi les moins favorisées, c'est-à-dire situées en bas de colonne 91 et/ou à filtre 41F présentant un niveau de colmatage élevé. Chaque point de liaison entre deux tronçons successifs représente ainsi un coude de rupture de pente, indiquant le point précis pour lequel la bouche 120 considérée fonctionne sous exactement son débit d'air individuel nominal Qn de coude, correspondant à une pression différentielle accrue par rapport à celle de valeur nominale PDs, de par le colmatage. Si l'on effectue un relevé de la courbe C40 lors de la mise en service, ou de plusieurs telles courbes C40 pour diverses configurations d'ouverture des diverses bouches 120, on peut ensuite, en exploitation, comparer une telle courbe actuelle à la courbe d'origine, ou à une dernière courbe d'exploitation, et ainsi déterminer le sens et le niveau de colmatage.

On notera que le flux d'air individuel traversant une bouche 120, sensible à la pression différentielle locale sur la bouche 120 considérée et inférieur au flux d'air nominal de bridage Qn, subit une perte de charge en fonction de la position de la bouche 120 considérée dans la colonne 91 et en fonction du débit d'air des autres bouches 120. Ainsi, le deuxième tronçon C42 présente une pente globale qui dépend de la courbe de réponse du type de bouche 130 considéré mais qui dépend aussi de la perte de charge provoquée par le débit d'air, constant, des autres bouches 120.

Il peut être prévu un stimulus par modulation de pression P. En pareil cas,

- à l'étape b), le bloc de calcul 11C commande, aux circuits d'asservissement 13, d'appliquer un stimulus sous forme d'un décalage de pression ΔP d'une valeur courante de pression d'air Px assurée par le ventilateur 9, par décalage de la valeur d'un paramètre parmi plusieurs paramètres associés déterminant la puissance du ventilateur 9, comme par exemple la tension ou puissance électrique d'alimentation du moteur 8 ou son couple de sortie ou sa fréquence de rotation Fr, par rapport à une valeur homologue P0 du jeu initial J0, et,
- à l'étape c), à titre de dite dérive, les circuits d'asservissement 13 mesurent une variation de débit d'air ΔQ, induite par le dit décalage de pression ΔP.

En pareil cas,

- le bloc de calcul 11C peut effectuer une répétition, au moins une fois, à un instant courant ultérieur Ty, des étapes ci-dessus, en calculant à chaque fois une pente courante respective (ΔQx/ΔPx et ΔQy/ΔPy) et,
- à l'étape c), il compare les pentes courantes respectives ΔQx/ΔPx ΔQy/ΔPy pour déterminer la dite direction de dérive.

Le stimulus est par exemple produit par le décalage de la valeur d'un paramètre de commande de fonctionnement du ventilateur 9, constituant le dit paramètre associé (dé)pression P, puissance électrique W, couple de sortie, fréquence de rotation Fr.

Il peut toutefois être prévu un stimulus par modulation de débit d'air Q. En pareil cas :

- le bloc de calcul 11C commande aux circuits d'asservissement 13 d'appliquer un stimulus sous forme d'un décalage ΔQx d'une valeur courante du dit débit d'air Qx du ventilateur 9, par rapport à une valeur homologue Q0 du jeu initial J0,
- les circuits d'asservissement 13 détectent une variation (par exemple ΔW pour la puissance électrique W) d'un dit paramètre associé P, W, couple, Fr induite par le dit décalage de débit d'air ΔQx, et
- le bloc de calcul 11C, recevant ces informations, détermine le dit sens d'évolution du niveau de colmatage d'après un signe d'une sensibilité, ou élasticité, du paramètre associé P, W, couple, Fr vis-à-vis du dit stimulus.

Le décalage ΔQx va modifier le point de fonctionnement des bouches 120 sur par exemple un tronçon de courbe de réponse à débit d'air régulé par une languette d'étranglement, c'est-à-dire va le faire légèrement croître ou décroître, ou même fortement décroître si la dépression différentielle que perçoit la bouche 120 tombe en dessous du seuil de pression différentielle nominale de seuil PDs.

La dite mesure de dérive correspond à une mesure d'une amplitude de la dite sensibilité, représentée par une amplitude de la dite variation induite du paramètre associé P, W, couple, Fr.

De préférence,

- le bloc de calcul 11C répète au moins une fois les étapes ci-dessus d'application d'un stimulus, à un instant courant ultérieur Ty, et
- le bloc de calcul 11C calcule à chaque fois une pente courante respective ΔQx/ΔPx, ΔQy/ΔPy, dont le signe de l'évolution de la valeur au fil du temps indique le sens d'évolution du niveau de colmatage.

Pour déterminer la dite sensibilité du paramètre associé P, W, couple, Fr, le bloc de calcul 11C apporte une modification à une valeur de réglage d'un paramètre de commande de fonctionnement du ventilateur, constituant le dit paramètre associé W, couple, Fr, de façon à compenser, au moins selon un certain pourcentage, la dite variation ΔW du dit paramètre associé W, couple, Fr induite par le dit décalage ΔQx de débit d'air Qx, et la dite sensibilité du dit paramètre associé W, couple, Fr est déterminée d'après la valeur de la dite modification apportée, rapportée au dit pourcentage.

## Revendications

**1.** Procédé d'estimation de l'évolution d'un niveau de colmatage de filtres à air (11F, 41 F, 130) installés dans divers locaux et reliés à une installation d'au moins une conduite d'échange d'air (12), activée par un ventilateur (9) entraîné par un moteur (8), **caractérisé par** la suite des étapes suivantes :

a) à un instant initial (T0), on détermine et mémorise un jeu initial (J0) de valeurs de paramètres associés de fonctionnement de l'installation (Y), paramètres (Y) comprenant un paramètre de débit d'air instantané (Q) assuré par le ventilateur et au moins un paramètre instantané associé de fonctionnement du ventilateur (9) pour assurer le débit d'air instantané considéré Q, les paramètres associés variant de façon corrélée pour définir une courbe de réponse, initiale (C10, C20), prévue pour l'installation,
b) à un instant courant (Tx), on détermine des valeurs courantes (Vx) des dits paramètres (Y) pour un point de fonctionnement courant (Fx) sur une dite courbe de réponse, actuelle, (Cx),
c) on compare les valeurs courantes (Vx) au jeu initial (J0 pour déterminer une direction de dérive du point de fonctionnement courant (Fx) par rapport à la courbe de réponse initiale (C10, C20), et
d) on détermine un sens d'évolution du niveau de colmatage d'après la direction de la dérive.

**2.** Procédé selon la revendication 1, dans lequel, à l'étape c), on mesure la dite dérive pour, à l'étape d), estimer un niveau de dérive de colmatage, selon une loi croissant avec la dérive mesurée.

**3.** Procédé selon la revendication 2, dans lequel on mémorise de dits niveaux de dérive de colmatage au fil du temps pour ainsi établir une table de prédiction temporelle de l'évolution du niveau de colmatage, et, par la suite, on utilise la table de prédiction pour effectuer la dite estimation du niveau de dérive de colmatage.

**4.** Procédé selon l'une des revendications 1 à 3, dans lequel on corrige une courbe (C10, C20) de consigne de régulation du ventilateur (9) en lui appliquant une dérive de consigne dans un sens fonction de la dite direction de dérive du colmatage.

**5.** Procédé selon l'une des revendications 1 à 4, dans lequel :

- à l'étape b), on applique un stimulus sous forme d'un décalage de pression (oP) d'une valeur courante de pression d'air (Px) assurée par le ventilateur (9), par décalage de la valeur d'un dit paramètre associé, par rapport à une valeur homologue (P0 du jeu initial (J0), et,
- à l'étape c), à titre de dite dérive, on mesure une variation de débit d'air (ΔQ), induite par le dit décalage de pression (ΔP).

**6.** Procédé selon la revendication 5, dans lequel

- on répète, au moins une fois, à un instant courant ultérieur (Ty), les étapes de la revendication 5, en calculant à chaque fois (x, y) une pente courante respective (ΔQx/ΔPx et ΔQy/ΔPy) entre une variation de débit d'air et une variation de pression associée, à un instant déterminé (x, y) et,
- à l'étape c), on compare les pentes courantes respectives ΔQx/ΔPx ΔQy/ΔPy pour déterminer la dite direction de dérive.

**7.** Procédé selon l'une des revendications 1 à 4, dans lequel :

- on applique un stimulus sous forme d'un décalage (ΔQx) d'une valeur courante du dit débit d'air (Qx) du ventilateur (9), par rapport à une valeur homologue (Q0) du jeu initial (J0),
- on détecte une variation d'un dit paramètre associé induite par le dit décalage de débit d'air (ΔQx), et
- on détermine le dit sens d'évolution du niveau de colmatage d'après un signe d'une sensibilité du paramètre associé vis-à-vis du dit stimulus.

**8.** Procédé selon les revendications 2 et 7 prises en combinaison, dans lequel la dite mesure de dérive selon la revendication 2 correspond à une mesure d'une amplitude de la dite sensibilité, représentée par une amplitude de la dite variation induite du paramètre associé.

**9.** Procédé selon l'une des revendications 7 et 8 en dépendance de la revendication 2, dans lequel, dans une étape finale, pour déterminer la dite sensibilité du paramètre associé, on apporte une modification à une valeur de réglage d'un paramètre de commande de fonctionnement du ventilateur, constituant le dit paramètre associé, de façon à compenser, au moins selon un certain pourcentage, la dite variation (ΔW) du dit paramètre associé induite par le dit décalage (ΔQx) de débit d'air (Qx), et la dite sensibilité du dit paramètre associé est déterminée d'après la valeur de la dite modification apportée, rapportée au dit pourcentage.

10. Procédé selon l'une des revendications 1 à 5 et 7 et 8, dans lequel, ayant prévu une bouche de service étalon (Rs), à débit d'air étalon (Qé), on commute son état pour passer, dans un sens quelconque connu, entre deux états extrêmes, respectivement de fermeture et d'ouverture, afin d'engendrer, à l'instant courant (Tx), un décalage (ΔQx) d'une valeur courante du dit débit d'air (Qx) du ventilateur, par rapport à une valeur homologue Q0 du jeu initial (J0),

    - et on effectue les étapes b) et suivantes.

11. Procédé selon les revendications 2 et 10 prises en combinaison, dans lequel on effectue une commutation progressive de débit d'air (Q) par commutation progressive de l'état de la bouche étalon (Rs) entre les états extrêmes et on effectue, en une pluralité N d'instants courants (Tx, Ty, Tz), une dite pluralité N d'échantillonnages de la réponse de l'installation en termes de dites valeurs courantes (Vx, Vy, Vz) des dits paramètres (Y) selon l'étape b) et, d'après la pluralité de dits niveaux de dérive ainsi obtenus, on établit une courbe de sensibilité de réponse de l'installation vis-à-vis de la dite commutation de débit d'air.

12. Procédé selon la revendication 11, dans lequel :

    - on modélise l'état d'une autre pluralité (BO) de filtres (11F, 41F, 130) de la dite conduite (91), par une équation comportant, en variables, les niveaux respectifs de colmatage de l'autre pluralité (BO) de filtres (11F, 41F, 130),
    - on effectue une dite pluralité N d'échantillonnages au moins égale à l'autre pluralité (BO) de filtres (11F, 41F, 130), et
    - on établit ainsi au moins une dite autre pluralité (BO) de dites équations, ce qui permet d'en déterminer une dite autre pluralité (BO) de valeurs des variables de colmatage.

13. Procédé selon l'une des revendications 1 à 12, dans lequel :

    - on mémorise une valeur moyenne de l'un des dits paramètres sur une plage horaire prédéterminée et sur une durée représentant plusieurs cycles d'utilisation de l'installation, et
    - on détermine de même, sur un dit cycle postérieur, une dite valeur moyenne courante du paramètre,
    - et l'étape c) est effectuée d'après les dites valeurs moyennes, respectivement mémorisée et courante.

14. Procédé selon l'une des revendications 1 à 13, dans lequel :

    - on fait varier un niveau courant de pression (P) dans l'installation dans une plage débordant au-dessus d'une valeur de seuil minimal de bon fonctionnement de bouches (120), associées à des filtres (41F) respectifs, à bridage du débit d'air au-delà d'un débit d'air nominal (Qn) en cas de pression différentielle excédant une pression différentielle prédéterminée (PDs) correspondant au dit seuil minimal et assurant au moins le débit d'air nominal (Qn),
    - on échantillonne, au fil du temps, la valeur du débit d'air (Q) afin de mesurer une variation de débit d'air ainsi induite, pour établir une courbe de réponse actuelle en débit d'air (Q), et
    - on repère, sur la courbe de réponse actuelle en débit d'air (Q), au moins une rupture de pente correspondant à une transition entre un fonctionnement incorrect de l'une des bouches (120), à débit d'air inférieur au débit d'air nominal (Qn) et un dit bon fonctionnement, à débit d'air excédant le débit d'air nominal (Qn) et provoquant ainsi le bridage du débit d'air, ce qui fournit une mesure de la pression différentielle de la bouche considérée (120) pour les conditions de fonctionnement de l'installation alors définies par les paramètres.

15. Groupe de ventilation (1) pour la mise en oeuvre du procédé selon l'une quelconque des revendications 1 à 14, comportant une unité centrale (20C) de commande d'un moteur (8) d'entraînement d'un ventilateur (9) prévu pour être relié à une installation de ventilation comportant au moins une conduite (10, 20, 81, 91) d'échange d'air avec divers locaux, **caractérisé par le fait qu'**il comporte :

    - des circuits (13) d'asservissement du ventilateur (9) agencés pour, à un instant initial (T0), déterminer et mémoriser un jeu initial (J0) de valeurs de paramètres associés de fonctionnement de l'installation Y, paramètres (Y) comprenant un paramètre de débit d'air instantané (Q) assuré par le ventilateur (9) et au moins un paramètre instantané associé de fonctionnement du ventilateur (9) pour assurer le débit d'air instantané considéré (Q), les paramètres associés variant de façon corrélée pour définir une courbe de réponse, initiale (C10, C20), prévue pour l'installation, les circuits d'asservissement (13) étant agencés pour, à un instant courant (Tx), déterminer des valeurs courantes (Vx) des dits paramètres Y pour un point de fonctionnement courant Fx sur une dite courbe de réponse, actuelle, (Cx), et
    - des circuits de calcul (11C), agencés pour comparer les valeurs courantes (Vx) au jeu initial (J0) pour déterminer une direction de dérive du point de fonctionnement courant Fx par rapport à la courbe de réponse initiale (C10, C20), et agencés pour déterminer un sens d'évolution du niveau de colmatage d'après la direction de la dérive.

**Claims**

1. Method for estimating the evolution of a level of clogging of air filters (11F, 41F, 130) installed in different locations and connected to a facility having at least one air exchange duct (12), operated by a fan (9) driven by a motor (8), **characterized by** the following sequence of steps:

   a) at an initial time (TO), determining and storing an initial set (DO) of associated operating parameter values of the facility (Y), parameters (Y) comprising a parameter of instantaneous airflow (Q) provided by the fan and at least one instantaneous parameter associated with operation of the fan (9) to ensure the airflow considered at instant Q, the associated parameters varying in a correlated fashion to define an initial response curve (C10, C20) scheduled for the facility,

   b) at a current point in time ($T_x$), determining the current values ($V_x$) of the said parameters (Y) for a current operating point ($F_x$) on a current response curve ($C_x$)

   c) comparing the current values ($V_x$) with the initial set (DO) to determine direction of drift of the current operating point ($F_x$) compared with the initial response curve (C10, C20), and

   d) determining a direction of change in the level of clogging from the direction of drift.

2. The method according to claim 1, wherein in step c) the said drift is measured in order, in step d) to estimate a drift level of clogging, according to a law that increases with the drift measured.

3. The method according to claim 2, wherein said levels of drift of clogging over time are stored to thereby establish a schedule for predicting in time changes in the level of clogging and, subsequently, using the prediction table to perform said estimation of the level of drift in clogging.

4. The method according to one of claims 1-3, wherein a set point curve (C10, C20) for controlling the fan (9) is corrected by applying thereto a set point drift in a direction depending on the said direction of drift of clogging .

5. The method according to one of claims 1-4, wherein:

   - in step b), a stimulus in the form of a pressure shift ($\Delta P$) in a current value of air pressure (Px) provided by the fan (9) is applied, by shifting the value of a said associated parameter, with respect to a corresponding value (P0) from the initial set (DO), and

   - in step c), by way of said drift, measuring a change in air flow ($\Delta Q$), brought about by the said pressure shift ($\Delta P$)

6. The method according to claim 5, wherein

   - there are repeated, at least once, at a current time later (Ty), the steps of claim 5, calculating each time (x, y) a respective current ($\Delta Qx/\Delta Px$ and $\Delta Qy/\Delta Py$) slope between a change in air flow and an associated pressure change at a given time (x, y), and

   - in step c) the respective current slopes ($\Delta Qx/\Delta Px$ and $\Delta Qy/\Delta Py$) are compared to determine said direction of drift.

7. The method according to one of claims 1-4, wherein:

   - a stimulus in the form of an shift ($\Delta Qx$) of a current value of said air flow (Qx) from the fan (9) is applied, compared to a corresponding value (Q0) of the initial set (DO)

   - a change of said associated parameter brought about by said shift ($\Delta Qx$) in air flow is detected and

   - the said direction of evolution of change in clogging is determined on the basis of a sign of sensitivity of the associated parameter with respect to said stimulus.

8. The method according to one of claims 2 and 7 taken in combination, in which the said measurement of drift of claim 2 corresponds to a measurement of an amplitude of said sensitivity, represented by an amplitude of said brought about change in the associated parameter.

9. The method according to one of claims 7 and 8 when dependent on claim 2, wherein, in a final step, to determine the said sensitivity of the associated parameter, changes made to the value of a setting for a parameter controlling fan operation, constituting said associated parameter, in order to compensate, at least according to a certain percentage, said change ($\Delta W$) of said associated parameter brought about by said shift ($\Delta Qx$) in airflow (Qx), and said sensitivity of said associated parameter is determined by the value of the said change introduced, in relation with said percentage.

10. The method according to one of claims 1 to 5 and 7 and 8, in which, having provided a standardised operating vent (Rs), with a standardised throughput (Qé), its state to move, in any known sense, between two extreme states, respectively closing and opening, to generate, at the current time (Tx), a shift ($\Delta Qx$) in a current value of said airflow (Qx) of the fan, compared to a corresponding value Q0 of the initial set (J0)

    - after which steps b) and those that follow it are performed.

11. The method according to claims 2 and 10 taken in combination, in which a gradual switching of airflow (Q) is performed by gradually switching the state of the standardised vent (Rs) between the extreme states and at a plurality N of current instants (Tx, Ty, Tz), a said plurality N of said samplings of the response of the facility in terms of said current values (Vx, Vy, Vz) of the said parameters (Y) according to step b) and, in accordance with the plurality of said drift levels thus obtained, a curve of response sensitivity of the facility vis-à-vis the said switching of air flow is drawn up.

12. The method of claim 11 wherein:

    - the state of another plurality (BO) filters (11F, 41F, 130) of the said duct (91) is modelled, by an equation involving, as its variables, the respective levels of clogging of the other plurality (BO) of filters (11F, 41F, 130)
    - a said plurality N of samplings at least equal to the other plurality (BO) of filters (11F, 41F, 130) is performed, and
    - whereby at least one said other plurality (BO) of said equations is established, allowing a said other plurality (BO) of values for the variables of clogging to be determined.

13. The method according to one of claims 1-12, wherein:

    - an average value of one of said parameters over a predetermined time range and over a period representing several cycles of use of the facility is stored in memory, and
    - similarly, over a said later cycle, a said current average value of the parameter is determined,
    - hand step c) is carried out according to the said known average values, respectively stored and current.

14. The method according to one of claims 1 to 13, wherein:

    - a current level of pressure (P) in the facility is caused to vary in a range which goes beyond above a minimum threshold value for of the vents (120), associated with the respective filters (41F), limiting the air flow beyond a nominal air flow (Qn) if differential pressure exceeds a predetermined pressure differential (PDs), corresponding to said minimum threshold and maintaining at least the nominal air flow (Qn),
    - sampling, over time, the value of airflow (Q) in order to measure a change in air flow thereby brought about, in order to establish a current response curve for airflow (Q), and
    - on the current response curve for airflow (Q), identifying at least one break in slope corresponding to a transition between a malfunction of one of the vents (120), with air flow below the nominal air flow (Qn) and one operating well, with air flow exceeding the nominal air flow (Qn) and thus causing a limiting of the air flow, thereby providing a measurement of the pressure differential for the vent (120) considered under operating conditions of the facility now defined by the parameters.

15. Ventilation unit (1) for the implementation of the method according to any one of claims 1 to 14, comprising a central processing unit (20C) for controlling a motor (8) for driving a fan (9) adapted to be connected to a ventilation system comprising at least one duct (10, 20, 81, 91) for air exchange with various locations, **characterized in that** it comprises:

    - circuits (13) for controlling the fan (9) adapted for, at an initial time (TO), determining and storing an initial set (J0) of associated parameter values for operation of the facility Y, the parameters (Y) comprising a parameter for instantaneous airflow (Q) provided by the fan (9) and at least one instantaneous associated parameter for operation of the fan (9) to provide the instantaneous airflow considered (Q), the associated parameters varying in a correlated fashion in order to define an initial response curve (C10, C20), scheduled for the facility, the controlling circuits (13) being adapted, at a current time (Tx), determining the current values (Vx) of said parameters Y for a current operating point Fx on a current response curve (Cx) and
    - computing circuits (11C), adapted to compare the current values (Vx) of the initial set (J0) to determine a direction of drift of the current operating point Fx compared to the initial response curve (C10, C20) and adapted to determine a direction of change in the level of clogging from the direction of drift.

**Patentansprüche**

1. Verfahren zur Schätzung der Entwicklung des Verstopfungsgrads von Luftfiltern (11F, 41F, 130), die in verschiedenen Räumlichkeiten installiert sind und mit mindestens einer Luftaustauschleitung (12) verbunden sind, die durch einen Ventilator (9) betätigt wird, der von einem Motor (8) angetrieben wird, **gekennzeichnet durch** die Folge der folgenden Schritte:

a) an einem Anfangszeitpunkt (T0) wird ein Anfangssatz (J0) von Werten von zugehörigen Betriebsparametern (Y) der Anlage bestimmt und gespeichert, wobei diese Parameter (Y) einen momentanen Parameter für den Luftdurchsatz (Q) umfassen, der vom Ventilator gewährleistet wird, und mindestens einen zugehörigen momentanen Betriebsparameter des Ventilators (9), um den betreffenden momentanen Luftdurchsatz (Q) zu gewährleisten, wobei die zugehörigen Parameter auf korrelierte Weise variieren, um eine Anfangsansprechkurve (C10, C20) zu definieren, die für die Anlage vorgesehen ist,

b) an einem aktuellen Zeitpunkt (Tx) werden die aktuellen Werte (Vx) der Parameter (Y) für einen aktuellen Betriebspunkt (Fx) auf einer aktuellen Ansprechkurve (Cx) bestimmt,

c) die aktuellen Werte (Vx) werden mit dem Anfangssatz (J0) verglichen, um eine Abweichungsrichtung des aktuellen Arbeitspunkts (Fx) im Verhältnis zur Anfangsansprechkurve (C10, C20) zu bestimmen, und

d) eine Entwicklungsrichtung des Verstopfungsgrads wird der Abweichungsrichtung entsprechend bestimmt.

2. Verfahren nach Anspruch 1, wobei die Abweichung in Schritt c) gemessen wird, um in Schritt d) einem Gesetz gemäß, das der gemessenen Abweichung entsprechend wächst, einen Abweichungsgrad der Verstopfung zu schätzen.

3. Verfahren nach Anspruch 2, wobei Abweichungsgrade der Verstopfung mit der Zeit gespeichert werden, um auf diese Weise eine Tabelle zur zeitlichen Vorhersage der Entwicklung des Verstopfungsgrads zu erstellen, und die Vorhersagetabelle danach verwendet wird, um die Schätzung des Abweichungsgrads der Verstopfung durchzuführen.

4. Verfahren nach einem der Ansprüche 1 bis 3, wobei eine Regelungskurve (C10, C20) des Ventilators (9) korrigiert wird, indem auf diese ein Abweichungssollwert in eine Richtung abhängig von der Richtung der Verstopfungsabweichung angewandt wird.

5. Verfahren nach einem der Ansprüche 1 bis 4, wobei:

- in Schritt b) ein Stimulus in Form einer Druckänderung (ΔP) eines aktuellen Werts des Luftdrucks (Px) angewandt wird, der vom Ventilator (9) gewährleistet wird, indem der Wert eines zugehörigen Parameters im Verhältnis zu einem entsprechenden Wert (P0) des Anfangssatzes (J0 geändert wird, und
- in Schritt c) als Abweichung eine Luftdurchsatzänderung (ΔQ) gemessen wird, die durch diese Druckänderung (ΔP) eingeleitet wird.

6. Verfahren nach Anspruch 5, wobei

- die Schritte von Anspruch 5 an einem späteren aktuellen Zeitpunkt (Ty) mindestens einmal wiederholt werden, indem jedes Mal (x, y) eine jeweilige aktuelle Steigung (ΔQx/ΔPx und ΔQy/ΔPy) zwischen einer Änderung des Luftdurchsatzes und einer zugehörigen Druckänderung an einem bestimmten Zeitpunkt (x, y) berechnet wird, und
- in Schritt c) die jeweiligen aktuellen Steigungen ΔQx/ΔPx ΔQy/ΔPy verglichen werden, um die Abweichungsrichtung zu bestimmen.

7. Verfahren nach einem der Ansprüche 1 bis 4, wobei:

- ein Stimulus in Form einer Änderung (ΔQx) eines aktuellen Werts des Luftdurchsatzes (Qx) des Ventilators (9) im Verhältnis zu einem entsprechenden Wert (Q0) des Anfangssatzes (J0) angewandt wird,
- eine Änderung eines zugehörigen Parameters, die durch diese Änderung des Luftdurchsatzes (ΔQx) eingeleitet wird, erkannt wird, und
- die Entwicklungsrichtung des Verstopfungsgrads einem Empfindlichkeitszeichen des zugehörigen Parameters diesem Stimulus gegenüber entsprechend bestimmt wird.

8. Verfahren nach den Ansprüchen 2 und 7 in Kombination genommen, wobei die Messung der Abweichung nach Anspruch 2 eine Messung einer Variationsbreite dieser Empfindlichkeit ist, die durch eine Variationsbreite der eingeleiteten Änderung des zugehörigen Parameters dargestellt wird.

9. Verfahren nach den Ansprüchen 7 und 8 in Abhängigkeit von Anspruch 2, wobei in einem Endschritt, um die Empfindlichkeit des zugehörigen Parameters zu bestimmen, an einem Regelungswert eines Steuerparameters des Betriebs des Ventilators, der diesem zugehörigen Parameter entspricht, eine Modifikation vorgenommen wird, um die Variation (ΔWx) des zugehörigen Parameters, die durch die Änderung (ΔQx) des Luftdurchsatzes (Qx) eingeleitet wird, mindestens bis auf einen bestimmten Prozentsatz auszugleichen, und die Empfindlichkeit dieses zugehörigen Parameters dem Wert dieser auf den Prozentsatz bezogenen Modifikation entsprechend bestimmt wird.

10. Verfahren nach einem der Ansprüche 1 bis 5 und 7 und 8, wobei ein Eichluftauslass (Rs) mit einem Eichluftdurchsatz (Qé) vorgesehen wird und sein Zustand umgeschaltet wird, um in einer beliebigen bekannten Richtung zwischen zwei Extremzuständen überzugehen, jeweils geöffnet und geschlossen, damit an einem aktuellen Zeitpunkt (Tx) eine Änderung (ΔQx) eines aktuellen Werts des Luftdurchsatzes (Qx) des Ventilators im Verhältnis zu einen entsprechenden Wert Q0 des Anfangssatzes (J0) bewirkt wird, und die Schritte b) und folgende durchgeführt werden.

11. Verfahren nach den Ansprüchen 2 und 10 in Kombination genommen, wobei eine progressive Umschaltung des Luftdurchsatzes (Q) durch progressives Umschalten des Zustands des Eichluftauslass (Rs) zwischen den zwei Extremzuständen durchgeführt wird und an einer Vielzahl N von aktuellen Zeitpunkten (Tx, Ty, Tz) eine Vielzahl von Abtastungen des Ansprechverhaltens der Anlage auf die aktuellen Werte (Vx, Vy, Vz) der Parameter (Y) gemäß Schritt b) durchgeführt wird und der Vielzahl der auf diese Weise erhaltenen Abweichungsgrade entsprechend eine Ansprechempfindlichkeitskurve der Anlage gegenüber der Umschaltung des Luftumsatzes erstellt wird.

12. Verfahren nach Anspruch 11, wobei:

    - der Zustand einer anderen Vielzahl (BO) von Filtern (11F, 41F, 130) der Leitung (91) durch eine Gleichung modelliert wird, die als Variablen die jeweiligen Verstopfungsgrade der anderen Vielzahl (BO) von Filtern (11F, 41F, 130) umfasst,
    - eine Vielzahl N von Abtastungen durchgeführt wird, die mindestens der anderen Vielzahl (BO) von Filtern (11F, 41F, 130) entspricht, und
    - auf diese Weise mindestens eine andere Vielzahl N dieser Gleichungen erstellt wird, was es ermöglicht, daraus eine andere Vielzahl (BO) von Werten der Verstopfungsvariablen zu bestimmen.

13. Verfahren nach einem der Ansprüche 1 bis 12, wobei:

    - ein Mittelwert eines dieser Parameter in einem vorbestimmten Zeitfenster und über eine Dauer hinweg, die mehreren Arbeitszyklen der Anlage entspricht, gespeichert wird und
    - während eines späteren Zyklus auch ein aktueller Mittelwert des Parameters bestimmt wird,
    - und Schritt c) jeweils diesen gespeicherten und aktuellen Mittelwerten entsprechend durchgeführt wird.

14. Verfahren nach einem der Ansprüche 1 bis 13, wobei:

    - ein aktueller Druckpegel (P) in der Anlage in einem Bereich variiert wird, der über einem minimalen Schwellenwert für den ordnungsgemäßen Betrieb der Luftauslässe (120) mit jeweiligen Filtern (41F) liegt, mit Drosselung des Luftdurchsatzes oberhalb eines Nennluftdurchsatzes (Qn), falls der Differenzdruck einen vorbestimmten Differenzdruck (PDs) übersteigt, der dem minimalen Schwellenwert entspricht und mindestens den Nennluftdurchsatz (Qn) gewährleistet,
    - der Wert des Luftdurchsatzes (Q) mit der Zeit abgetastet wird, um eine Variation des auf diese Weise eingeleiteten Luftdurchsatzes zu messen, um eine aktuelle Ansprechkurve des Luftdurchsatzes (Q) zu erstellen, und
    - auf der aktuellen Ansprechkurve des Luftdurchsatzes (Q) mindestens ein Steigungsabbruch ermittelt wird, der einem Übergang zwischen einem nicht ordnungsgemäßen Betrieb eines der Luftauslässe (120), dessen Luftdurchlass kleiner ist als der Nennluftdurchsatz (Qn), und einem ordnungsgemäßen Betrieb mit einem Luftdurchlass größer als der Nennluftdurchsatz (Qn) entspricht und der die Drosselung des Luftdurchsatzes verursacht, was eine Messung des Diffenzdrucks des betreffenden Luftauslasses (120) für die durch die Parameter definierten Betriebsbedingungen der Anlage ergibt.

15. Lüftungsanlage (1) zur Durchführung des Verfahrens nach einem der Ansprüche 1 bis 14, umfassend eine zentrale Einheit (20C) zur Steuerung eines Antriebsmotors (8) eines Ventilators (9), der vorgesehen ist, um mit einer Lüftungsanlage mit mindestens einer Leitung (10, 20, 81, 91) für den Luftaustausch mit verschiedenen Räumlichkeiten verbunden zu werden, **dadurch gekennzeichnet, dass** sie umfasst:

    - Regelungsschaltungen (13) für den Ventilator (9), angeordnet, um an einem Anfangszeitpunkt (T0) einen Anfangssatz (J0) von zugehörigen Werten der Betriebsparameter (Y) der Anlage zu bestimmen und zu speichern, wobei die Parameter (Y) einen momentanen Parameter für den Luftdurchsatz (Q) umfassen, der vom Ventilator (9) gewährleistet wird, und mindestens einen zugehörigen momentanen Betriebsparameter des Ventilators (9), um den betreffenden momentanen Luftdurchsatz (Q) zu gewährleisten, wobei die zugehörigen Parameter auf korrelierte Weise variieren, um eine Anfangsansprechkurve (C10, C20) zu definieren, die für die Anlage vorgesehen ist, wobei die Regelungsschaltungen (13) angeordnet sind, um an einem aktuellen Zeitpunkt (Tx) die aktuellen Werte (Vx) der Parameter (Y) für einen aktuellen Arbeitspunkt (Fx) auf einer aktuellen Ansprechkurve (Cx) zu bestimmen, und

- Rechenschaltungen (11C), angeordnet, um die aktuellen Werte (Vx) mit dem Anfangssatz (J0) zu vergleichen, um eine Abweichungsrichtung des aktuellen Arbeitspunkts (Fx) im Verhältnis zur Anfangsansprechkurve (C10, C20) zu bestimmen, und angeordnet, um eine Entwicklungsrichtung des Verstopfungsgrads der Abweichungsrichtung entsprechend zu bestimmen.

F I G U R E   1

F I G U R E     2

**F I G U R E   3**

**F I G U R E    4**

**F I G U R E   5**

𝒫

Pression

P max

P min réel

P min initial

C20A)

C

A

ΔP

C20

D

B

C30

Q min    Q mesure    Q max
                      Q_B

Débit

Q

F I G U R E    6

F I G U R E    7

F I G U R E    10

F I G U R E    8

EP 2 135 660 B1

F I G U R E   9

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2689784 A